# EUROPÄISCHE PATENTSCHRIFT

(11) **EP 0 790 875 B1**
(45) Veröffentlichungstag und Bekanntmachung des Hinweises auf die Patenterteilung: **02.11.2000**
(21) Anmeldenummer: 96927576.7
(22) Anmeldetag: 22.07.1996
(51) Int. Cl.: B22F 3/105, B23K 26/14

(54) **VERFAHREN UND VORRICHTUNG ZUR HERSTELLUNG VON METALLISCHEN WERKSTÜCKEN**
PROCESS AND DEVICE FOR MAKING METAL WORKPIECES
PROCEDE ET DISPOSITIF DE PRODUCTION DE PIECES METALLIQUES

(30) Priorität: 13.09.1995 DE 19533960
(43) Veröffentlichungstag der Anmeldung: 27.08.1997
(73) Patentinhaber: FRAUNHOFER-GESELLSCHAFT ZUR FÖRDERUNG DER ANGEWANDTEN FORSCHUNG E.V., 80636 München (DE)
(72) Erfinder: CELIKER, Tanju, D-52074 Aachen (DE); HERFURTH, Hans-Joachim, D-52074 Aachen (DE); CELI, Ivo, D-52062 Aachen (DE)
(74) Vertreter: Grünecker, Kinkeldey, Stockmair & Schwanhäusser Anwaltssozietät
(86) Internationale Anmeldenummer: EP9603231
(87) Internationale Veröffentlichungsnummer: WO9710067

(56) Entgegenhaltungen:
- EP-A- 0 555 896
- EP-A- 0 558 870
- US-A- 4 724 299
- LASER ASSISTED NET SHAPE ENGINEERING PROCEEDINGS OF THE LANE '94, Bd. 2, 1994, MEISENBACH BAMBERG, Seiten 803-814, XP002018096 M.L. MURPHY ET AL.: "The Rapid Manufacture of Metallic Components by Laser Sursface Cladding" in der Anmeldung erwähnt

## Beschreibung

Die vorliegende Erfindung betrifft ein Verfahren zur Herstellung von metallischen Werkstücken, insbesondere von Formwerkzeugen, wobei mit einem Laserstrahl metallhaltiges Pulver in einem Schmelzbereich des Laserstrahls schichtweise aufgeschmolzen wird und aufgebrachte Schichten spanend nachbearbeitet werden. Darüber hinaus betrifft die Erfindung eine Vorrichtung zur Herstellung von metallischen Werkstücken, insbesondere zur Durchführung des Verfahrens, mit einer Beschichtungseinrichtung, die eine Lasereinheit mit einem Laserstrahl-Fokussierkopf und eine Pulverzuführungsvorrichtung zur Zuführung von metallhaltigem Pulver in einen Schmelzbereich des Laserstrahls aufweist, und einer Zerspanungsvorrichtung.

Für die Herstellung von Formwerkzeugen sind bereits eine Vielzahl von Verfahren bekannt geworden, die sich grundsätzlich in zwei Kategorien einteilen lassen, nämlich einstufige Verfahren wie beispielsweise Drei- und Fünfachsfräsen oder Drahterodieren und zweistufige Verfahren wie beispielsweise Senkerodieren mit vorangehender Herstellung der Erodierelektroden oder konventioneller Modellbau mit Folgetechniken wie Gießen oder Metallspritzen.

Grundsätzlich besitzen alle der genannten Techniken den Nachteil, zeitaufwendig zu sein. Darüber hinaus ist zum Teil, wie beispielsweise beim Fräsen, ein hoher Programmieraufwand notwendig. Die zweistufigen Verfahren einschließlich der Erodiertechniken oder des herkömmlichen Modellbau- und Gießverfahrens erfordern mehrere Bearbeitungsschritte bis zum metallischen Werkzeug.

Die genannten Nachteile kommen insbesondere dann zum Tragen, wenn nur eine geringe Stückzahl von gleichen Werkstücken zu zu fertigen ist. Um auch sehr geringe Stückzahlen flexibel und wirtschaftlich zu fertigen, ist es bereits bekannt geworden, Werkstücke durch Schmelzen von metallhaltigem Pulver schichtweise aufzubauen. Beispielsweise zeigt die EP-A-0 558 870 ein Verfahren zum Freiformschweißen von Metallstrukturen, bei dem mittels eines Lasers Metallpulver oder Metalldraht durch wiederholten Auftrag auf ein Substrat aufgeschmolzen wird, wobei der bereits hergestellte Teil der Metallstruktur selbst als Substrat dient.

Dieses Verfahren ist jedoch auf die Herstellung von Prototypen bzw. auf Werkstücke beschränkt, deren Obefläche und Formgenauigkeit keinen hohen Ansprüchen unterliegt, da durch Freiformschweißen nur geringe Genauigkeiten erzielbar sind.

Ferner wurde bereits ein Verfahren nach dem Oberbegriff des Anspruches 1 und eine Vorrichtung nach dem Oberbegriff von Anspruch 20 zur Herstellung von metallischen Werkstücken vorgeschlagen, das bzw. die das schichtweise Aufschmelzen von metallhaltigem Pulver mittels eines Laserstrahls und eine spanende Nachbearbeitung mittels einer Zerspanungsvorrichtung verbindet (M.L. Murphy et al., The Rapid Manufacture of Metallic Components by Laser Surface Cladding, in: Laser Assisted Net-shape Engineering, Proceedings of the LANE '94, Vol. II, Seite 803-814). Hierbei ist eine Beschichtungseinrichtung, die einen CO₂-Laser und eine Pulverzuführungsvorrichtung aufweist, an einer Fräsmaschine montiert. Ein Fokussierkopf, der den Laserstrahl fokussiert, ist in der Werkzeugeinspannvorrichtung der Fräsmaschine einspannbar und koaxial mit der Spindel der Fräsmaschine angeordnet. Die Pulverzuführungsvorrichtung weist ein hierzu seitlich angeordnetes Rohr auf, durch das metallhaltiges Pulver schräg in einen Schmelzbereich des Laserstrahls zugeführt wird. Hierbei werden bei einem Laserstrahl-Fokussierpunktdurchmesser von mehreren Millimetern (1 mm - 5 mm) Spuren mit einer Dicke im Bereich größer 1 mm aufgebracht).

Dieses bekannte Verfahren und die zugehörige Vorrichtung sind jedoch vorrangig nur dafür geeignet, Werkstücke größerer Abmessungen ohne fein ausgebildete Konturen herzustellen. Unbefriedigend ist hierbei besonders die Herstellbarkeit von im Feinbereich liegenden Werkstücken wie beispielsweise Formwerkzeugen zum Spritzgießen kleiner Kunststoffbauteile.

Der vorliegenden Erfindung liegt daher die Aufgabe zugrunde, ein verbessertes Verfahren und eine verbesserte Vorrichtung der eingangs genannten Art anzugeben, die die Herstellung von metallischen Werkstücken auch im Feinbereich mit erhöhter Genauigkeit erlauben.

Hinsichtlich des Verfahrens wird diese Aufgabe bei einem Verfahren der eingangs genannten Art erfindungsgemäß dadurch gelöst, daß das Pulver koaxial zu dem Laserstrahl in den Schmelzbereich zugeführt wird und die einzelnen Schichten in Spuren mit einer Breite im Bereich von 0,1 mm - 1 mm und einer Dicke im Bereich von 0,05 mm- 0,5 mm aufgebracht werden.

Hierdurch können auch feine und filigrane Formelemente mit hoher Genauigkeit hergestellt werden. Die koaxiale Zuführung des Pulvers gewährleistet einen gegenüber der seitlich angeordneten Pulverdüse gleichmäßigen, richtungsunabhängigen Materialauftrag insbesondere auch wenn sehr dünne Spuren aufzubringen sind. Das Aufbringen der einzelnen Schichten in Spuren der oben genannten Größenbereiche vermindert ferner den Aufwand bei der spanenden Nachbearbeitung, da die Schichten bereits während des Beschichtungsvorganges sehr genau und nahe der gewünschten Endform des Werkstückes geformt werden.

Eine vorteilhafte Ausgestaltung der Erfindung besteht darin, daß die Spuren mit einer Breite im Bereich von 0,2 mm - 0,5 mm und einer Dicke im Bereich von 0,05 mm - 0,2 mm aufgebracht werden.

Entsprechend einer bevorzugten Ausgestaltung der Erfindung wird eine einzelne Schicht in Spuren unterschiedlicher Geometrie aufgebracht. Bevorzugt werden in Randzonen einer Schicht Spuren mit relativ geringer Breite und geringer Dicke aufgebracht, während in einer Kernzone der Schicht Spuren mit relativ größerer Breite und größerer Dicke aufgebracht werden. Hierdurch wird bei hoher Aufbauleistung eine Schicht mit sehr hoher Genauigkeit hergestellt. Der Schichtbereich, nämlich die Kernzone, der keinen Einfluß auf die Geometrie- und Maßgenauigkeit besitzt, wird mit hoher Aufbauleistung erzeugt, d.h. mit größerem Strahldurchmesser, höherer Strahlleistung und größerer Pulvermenge. Die für die Genauigkeit entscheidenden Randzonen einer Schicht lassen sich durch die feinen Spuren mit hoher Genauigkeit formen.

Eine bevorzugte Ausgestaltung der Erfindung besteht auch darin, daß Spuren in Kernzonen unterschiedlicher Schichten in verschiedenen Richtungen aufgebracht werden. Die Veränderung der Orientierung der Füllspuren in den Kernzonen von Schicht zu Schicht erhöht die Ebenheit der zu erzeugenden Fläche.

Eine vorteilhafte Weiterbildung der Erfindung ist auch dadurch gegeben, daß das Pulver bei einer Laserleistung von vorzugsweise kleiner als 1 kW aufgeschmolzen wird. Vorzugsweise werden Laserquellen, deren Strahl mit Lichtwellenleitern übertragbar sind, insbesondere ein Nd-YAG-Laser verwendet. Gemäß einer weiteren bevorzugten Ausführungsform wird ein CO₂-Laser verwendet.

Entsprechend einer weiteren bevorzugten Ausgestaltung der Erfindung werden Schichten und/oder Spuren in einer Schicht aus unterschiedlichen Werkstoffen aufgebracht. Bevorzugt werden in beanspruchten Randzonen des Werkstücks Schichten und/oder Spuren in einer Schicht aus hartem verschleißfesten Werkstoff aufgebracht, während in Kernzonen des Werkstücks Schichten und/oder Spuren in einer Schicht aus duktilem Werkstoff aufgebracht werden. Durch einen derartigen partiell abgestimmten Materialeinsatz lassen sich optimierte Werkzeugeigenschaften erzielen.

Eine bevorzugte Ausgestaltung des erfindungsgemäßen Verfahrens besteht darin, daß die aufgebrachten Schichten jeweils einzeln nachbearbeitet werden.

Gemäß einer bevorzugten Ausgestaltung der Erfindung wird die jeweils zuletzt aufgebrachte Schicht vor Aufbringen einer weiteren Schicht an einer Oberseite, auf der die weitere Schicht aufgebracht wird, planbearbeitet, während eine Konturseite der zuletzt aufgebrachten Schicht vor Auftragen der weiteren Schicht unbearbeitet bleibt. Vorzugsweise wird jeweils die vorletzte Schicht oder mehrere vor der letzten Schicht aufgebrachte Schichten an einer Konturseite nachbearbeitet. Die zuletzt aufgebrachte oberste Schicht steht an ihren Konturseiten hierdurch über eine Sollkontur hinaus, so daß eine weitere Schicht bis über die Sollkontur hinaus aufgeschmolzen werden kann und insbesondere auch die Randbereiche an der Sollkontur ausgefüllt werden können.

Die jeweils separate Nachbearbeitung einzelner oder mehrerer aufgebrachter Schichten reduziert die spanende Nachbearbeitung auf eine zweidimensionale Bearbeitung der zuletzt erzeugten Lagen mit gleichbleibenden Zerspanungsbedingungen. Dies erleichtert den Programmieraufwand, vermindert die Kollisionsgefahr und ermöglicht eine automatisierte Prozeßführung. Darüber hinaus wird die Bearbeitung von dünnen tiefen Aussparungen vermieden.

Eine bevorzugte Ausgestaltung der Erfindung ist ferner auch dadurch gegeben, daß die Schichten durch Fräsen und/oder Schleifen nachbearbeitet werden. Gemäß einer bevorzugten Ausführungsform werden die Konturseiten der Schichten mit Feinfräswerkzeugen bearbeitet, während die Oberseite der jeweils zuletzt aufgebrachten Schicht mit Grobfräswerkzeugen bearbeitet wird. Auf diese Weise wird die zur Nachbearbeitung notwendige Bearbeitungszeit verkürzt, wobei an den Konturseiten der Schichten die notwendige Genauheit und Oberflächenqualität erreicht wird.

Vorzugsweise werden die Schichten mit Feinfräs- oder Schleifwerkzeugen bei einer Drehzahl im Bereich von 10 x 10³ U/min - 60 x 10³ U/min feinbearbeitet.

Besonders hohe Genauigkeiten im Konturbereich des Werkstücks werden nach einer bevorzugten Ausgestaltung der Erfindung dadurch erzielt, daß die zuletzt aufgetragene Schicht in einem Konturbereich nachbearbeitet wird derart, daß der Konturbereich in eine vorbestimmte Form gebracht wird und in einem folgenden Schritt auf den nachbearbeiteten Konturbereich Spuren geringer Dicke und Breite aufgebracht werden. Dadurch sind trotz zunächst grober und dadurch schneller Herstellung einer Schicht sehr genaue Konturbereiche aufbaubar.

Gemäß einer bevorzugten Ausgestaltung der Erfindung wird das Werkstück während der Laser- und/oder der zerspanenden Bearbeitung gekühlt. Durch die konstant gehaltene Temperatur des Werkstücks vereinfacht sich die Regelung der Beschichtungsparameter.

Eine bevorzugte Ausführung der Erfindung besteht ferner darin, daß nicht geschmolzenes Pulver aus einem Arbeitsbereich weggeblasen und/oder abgesaugt wird.

Hinsichtlich der Vorrichtung wird die oben genannte Aufgabe durch eine Vorrichtung mit den Merkmalen des Anspruches 20 gelöst.

Gemäß einer bevorzugten Ausgestaltung der Erfindung bilden der Laserstrahl-Fokussierkopf und der Pulverkopf eine integrale Beschichtungseinheit.

Die Zerspanungsvorrichtung weist entsprechend einer bevorzugten Ausführungsform der Erfindung einen Zerspanungskopf mit einem Fräs- oder Schleifwerkzeug auf. Vorzugsweise sind der Zerspanungskopf und die Beschichtungseinheit an einer Haltevorrichtung zur Halterung und Führung des Zerspanungskopfes und der Beschichtungseinheit gelagert.

Eine bevorzugte Weiterbildung der Erfindung besteht darin, daß die Haltevorrichtung eine Werkzeugwechselvorrichtung aufweist, in die wahlweise der Zerspanungskopf und die Beschichtungseinheit einspannnbar sind. Vorzugsweise sind der Zerspanungskopf und die Beschichtungseinheit, jeweils eingespannt in die Werkzeugwechseleinrichtung, zueinander koaxial angeordnet.

Hierdurch können Beschichtungseinheit und Zerspanungskopf rasch und einfach ausgewechselt werden, um abwechselnd neue Schichten aufzutragen und diese nachfolgend spanend nachzubearbeiten. Die koaxiale Anordnung von Beschichtungseinheit und Zerspanungskopf optimiert die Ausnutzung des zur Verfügung stehenden Arbeitsraumes.

Eine weitere bevorzugte Ausgestaltung der Erfindung ist eine zueinander versetzte Anordnung des Zerspanungskopfes und der Beschichtungseinheit.

Gemäß einer bevorzugten Ausgestaltung der Erfindung ist der Zerspanungskopf relativ zu der Beschichtungseinheit in einer Richtung senkrecht zu einem Werktisch verstellbar. Hierdurch kann die Beschichtungseinheit während der spanenden Nachbearbeitung oder einem Werkzeugwechsel (oder der Zerspankopf während eines Beschichtungsvorganges) aus einem Kollisionsbereich gebracht werden.

Eine bevorzugte Ausgestaltung der Erfindung ist auch dadurch gegeben, daß die Haltevorrichtung und der Werktisch relativ zueinander entlang von drei Achsen verstellbar sind. Gemäß einer weiteren Ausführungsform sind die Haltevorrichtung und der Werktisch relativ zueinander fünfachsig verstellbar. Hierdurch sind auch komplizierte Werkstückgeometrien z.B. Werkstücke mit Hinterschneidungen einfacher herstellbar.

Zur Verstellung der Haltevorrichtung und des Werktisches relativ zueinander sind entsprechend einer bevorzugten Ausgestaltung der Erfindung jeweils numerisch gesteuerte Vorschubantriebe vorgesehen. Darüber hinaus ist entsprechend einer bevorzugten Weiterbildung der Erfindung ein numerisch gesteuerter Antrieb zur Verstellung des Laserstrahl-Fokussierkopfes und des Pulverkopfes relativ zueinander vorgesehen.

Eine bevorzugte Ausführungsform der Erfindung besteht ferner darin, daß ein Lichtwellenleitfaserkabel mit dem Laserstrahl-Fokussierkopf verbunden ist. Eine aufwendige Strahlführung mittels Umlenkspiegeln ist dadurch unnötig.

Vorzugsweise ist als Laserquelle ein Nd-YAG-Laser vorgesehen.

Gemäß einer weiteren bevorzugten Ausführungsform der Erfindung wird der Laserstrahl durch eine Umlenkspiegelvorrichtung geführt. Vorzugsweise wird hierbei ein CO₂-Laser als Laserquelle verwendet.

Eine bevorzugte Ausgestaltung der Erfindung liegt auch darin, daß dem Zerspanungskopf eine Antriebsvorrichtung zum Antrieb des Fräs-oder Schleifwerkzeugs zugeordnet ist, durch das das Fräs- oder Schleifwerkzeug vorzugsweise im Bereich von 10 x 10³ U/min - 60 x 10³ U/min antreibbar ist. Vorzugsweise weist die Antriebsvorrichtung eine elektrische Hochgeschwindigkeitsspindel auf.

Entsprechend einer bevorzugten Weiterbildung der Erfindung weist der Werktisch eine Kühlvorrichtung zur indirekten Werkstückkühlung und Wärmeabfuhr auf. Die Kühlvorrichtung besitzt vorzugsweise im Werktisch ausgebildete Kühlmittelkanäle.

Ferner besteht eine bevorzugte Ausgestaltung der Erfindung darin, daß eine Pulverabsaugvorrichtung in einem Arbeitsbereich der Beschichtungseinheit vorgesehen ist. Überschüssiges Pulver, das im Schmelzbereich des Laserstrahls nicht geschmolzen wurde, wird hierdurch abgesaugt und kann nach einer möglichen Wiederaufbereitung der Pulverzuführungsvorrichtung rückgeführt werden.

Entsprechend einer bevorzugten Ausgestaltung der Erfindung ist eine elektronische Steuereinrichtung zur Steuerung der Beschichtungseinrichtung und der Zerspanungsvorrichtung vorgesehen. Vorzugsweise weist die Steuereinrichtung eine Schnittstelle auf, die mit einer CAD Einheit verbindbar ist, und darüber hinaus erzeugt die Steuereinrichtung auf der Grundlage von CAD Geometriedaten und manuell eingegebener Daten ein Bearbeitungsprogramm zur Ansteuerung der Beschichtungseinrichtung und der Zerspanvorrichtung. Hierdurch ist es möglich, ein Werkzeug, das auf einer CAD Einheit konstruiert wurde, in Ebenen zu zerlegen und die CAD Geometriedaten an die elektronische Steuereinrichtung zu übergeben, die dann auf der Grundlage dieser CAD Geometriedaten NC Daten erzeugt und diese zur Ansteuerung der Beschichtungseinrichtung bzw. der Zerspanungsvorrichtung verwendet. Auf diese Weise wird die Fertigung der Werkstücke in hohem Maße automatisiert.

Die Erfindung wird nachstehend anhand bevorzugter Ausführungsbeispiele in Verbindung mit zugehörigen Zeichnungen näher erläutert. In diesen zeigen:
- Fig. 1: eine schematische Darstellung einer Vorrichtung gemäß einem ersten Ausführungsbeispiel der Erfindung in einer perspektivischen Ansicht,
- Fig. 2: eine Teilansicht der Vorrichtung gemäßt Fig. 1, wobei eine Haltevorrichtung für eine Beschichtungseinheit mit einem Laserstrahl-Fokussierkopf und einem Pulverkopf, die in einer abgesenkten und einer angehobenen Stellung dargestellt sind, und einem Zerspanungskopf in einer Seitenansicht gezeigt ist,
- Fig. 3: eine Frontansicht der Haltevorrichtung nach Fig. 2, wobei die Beschichtungseinheit nicht dargestellt ist,
- Fig. 4: eine Draufsicht der Haltevorrichtung nach Fig. 2 und 3,
- Fig. 5: eine Teilansicht der Vorrichtung nach Fig. 1, wobei eine Werktischplatte, in der Kühlmittelkanäle ausgebildet sind, in einer Draufsicht (a), in einer Frontansicht (b) und einer Seitensansicht (c) gezeigt ist,
- Fig. 6: eine Teilansicht der Vorrichtung gemäß Fig. 1, wobei eine Absaugvorrichtung in einer Draufsicht (a) mit einer geschnittenen Ansicht und in einer geschnittenen Seitenansicht (b) dargestellt ist,
- Fig. 7: eine schematische Darstellung zur Verdeutlichung der Kinematik der Lagerung für die Beschichtungseinheit und den Zerspanungskopf gemäß dem Ausführungsbeispiel nach den Fig. 1 - 5,
- Fig. 8: eine schematische Darstellung, die das Prinzip eines Verfahrens und einer Vorrichtung zur Herstellung metallischer Werkstücke verdeutlicht und eine Beschichtungseinrichtung und eine Zerspanungseinrichtung sowie deren Beweglichkeit relativ zu einem Werkstück gemäß verschiedener bevorzugter Ausführungsbeispiele der Erfindung zeigt, wobei gemäß (a) und (b) Ausführungsformen mit einem CO₂-Laser und Umlenkspiegelvorrichtungen und gemäß (c) eine Ausführungsform mit einem Nd-YAG-Laser und Lichtwellenleitfaserkabel gezeigt sind,
- Fig. 9: eine schematische Darstellung, ähnlich Fig. 7, einer Haltevorrichtung mit einer Werkzeugwechselvorrichtung, wobei (a) eine Beschichtungseinheit und (b) ein Zerspanungskopf, jeweils in die Werkzeugwechselvorrichtung eingespannt, dargestellt sind,
- Fig. 10: eine schematische Darstellung ähnlich Fig. 9 wobei zusätzlich eine Werkzeugaufnahme für ein jeweils zeitweilig nicht benutztes Werkzeug gezeigt ist, wobei der Zerspanungskopf in einer Ausführung dargestellt ist, in der eine Druckluftspindel vorgesehen ist,
- Fig. 11: eine schematische Darstellung zur Verdeutlichung einer bevorzugten Ausführung des Verfahrens, wobei das schrittweise Aufbringen mehrerer Schichten mittels der Beschichtungseinheit und die zwischengeschaltete Nachbearbeitung einzelner Schichten mittels des Zerspanungskopfes im Ablauf dargestellt sind,

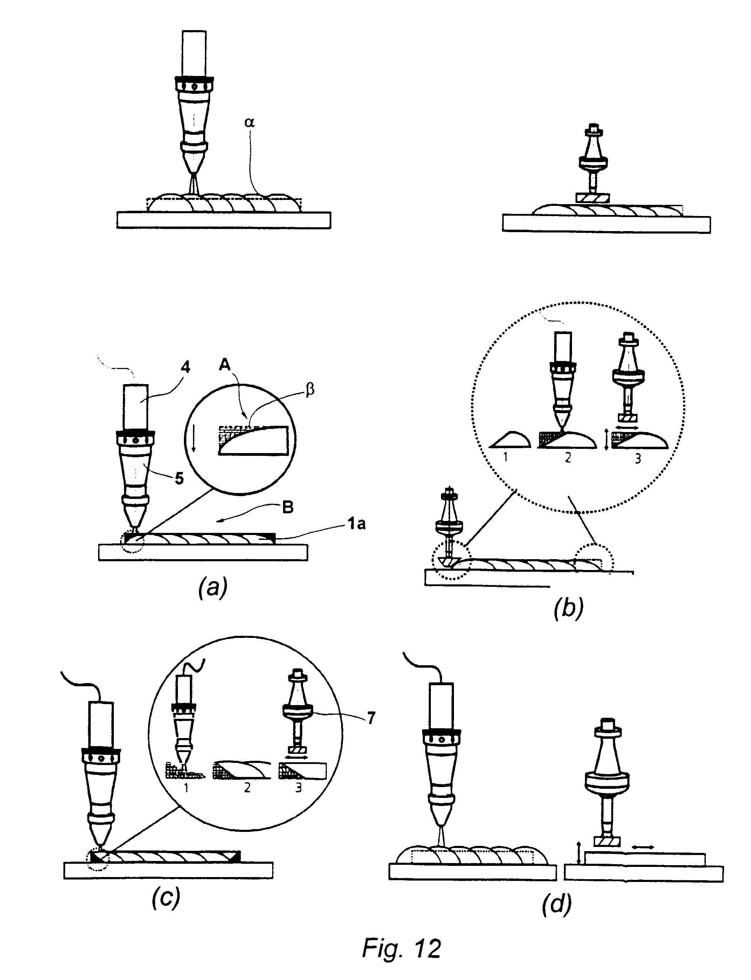

- Fig. 12: eine schematische Darstellung des Verfahrens gemäß bevorzugter Ausführungsformen, wobei in einem Kernbereich einer Schicht Spuren relativ großer Breite und Dicke aufgebracht werden und in einem Randbereich Spuren relativ geringer Breite und Dicke aufgebracht werden, wobei gemäß (a) die Randbereiche ohne vorherige spanende Bearbeitung, gemäß (b) die Randbereiche mit vorangehender spanender Bearbeitung, gemäß (c) zuerst die Randbereiche und hiernach die Kernbereiche mit nachfolgender spanender Bearbeitung beschichtet werden, während gemäß (d) die Randbereiche vollständig durch spanende Nachbearbeitung geformt werden,
- Fig. 13: eine schematische Darstellung, die eine relative Bewegung zwischen einem Laserstrahl-Fokussierkopf und einem Pulverkopf der Beschichtungseinheit zum Aufschmelzen von Spuren unterschiedlicher Breite zeigt,
- Fig. 14: eine schematische Darstellung ähnlich Fig. 8, die eine bevorzugte Ausführung des Verfahrens verdeutlicht, bei dem ein Werkstück aus unterschiedlichen Materialien aufgebaut wird,
- Fig. 15: eine schematische Darstellung, die eine bevorzugte Ausgestaltung des Verfahrens verdeutlicht, bei der ein beschädigter Bereich eines Werkstücks repariert wird,
- Fig. 16: eine schematische Darstellung zur Verdeutlichung der Geometrie von durch die erfindungsgemäße Vorrichtung fertigbaren Werkstücken mit Hinterschneidungen, und
- Fig. 17: eine schematische Darstellung, die (a) verschiedene Strategien beim Ausfüllen einer Schicht mit Spuren und (b) die Orientierung von Spuren mehrerer Schichten verdeutlicht.

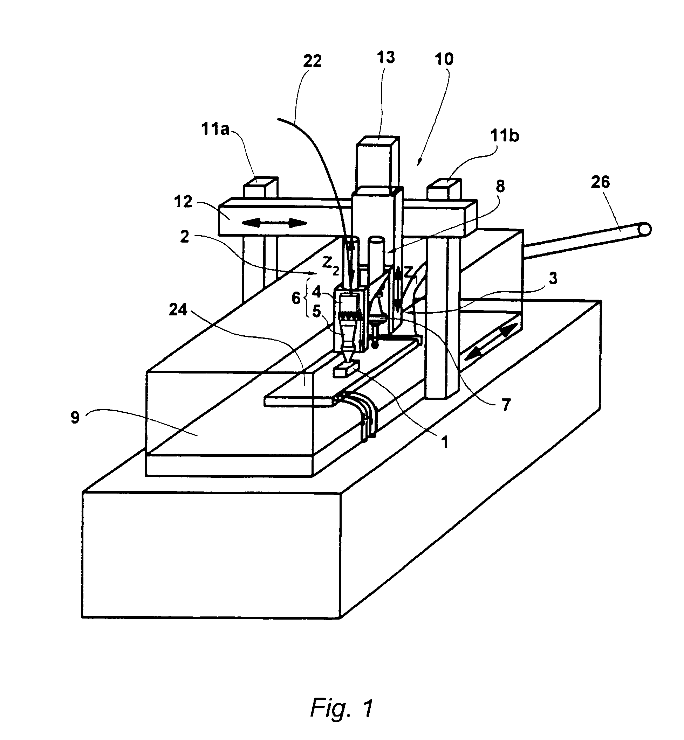

Zunächst soll mit Bezug auf die Fig. 1 - 7 der Aufbau einer Vorrichtung zur Herstellung von metallischen Werkstücken, insbesondere von Formwerkzeugen, nach einem ersten Ausführungsbeispiel der Erfindung erläutert werden.

Grunsätzlich weist die Vorrichtung eine Beschichtungseinrichtung 2 und eine Zerspanungsvorrichtung 3 auf. Mit Hilfe der Beschichtungseinrichtung 2 wird metallisches oder metallgebundenes Pulver aufgeschmolzen und schichtweise aufgetragen. Auf diese Weise wird das Werkstück 1 Schicht für Schicht aufgebaut. Um die Formgenauigkeit und die Oberflächengüte des Werkstücks 1 zu verbessern, werden die einzelnen Schichten, wie später noch näher erläutert werden wird, durch die Zerspanungsvorrichtung 3 einzeln oder zu mehreren zusammengefaßt nachbearbeitet.

Die Beschichtungseinrichtung 2 weist eine Lasereinheit mit einem Laserstrahl-Fokussierkopf 4 und eine Pulverzuführungsvorrichtung mit einem Pulverkopf 5 auf, der das metallhaltige Pulver in einen Schmelzbereich des Laserstrahls zuführt, um das Pulver, wie später noch näher erläutert werden wird, in Schichten auf ein Werkstücksubstrat bzw. auf bereits aufgebrachte Schichten aufzuschmelzen.

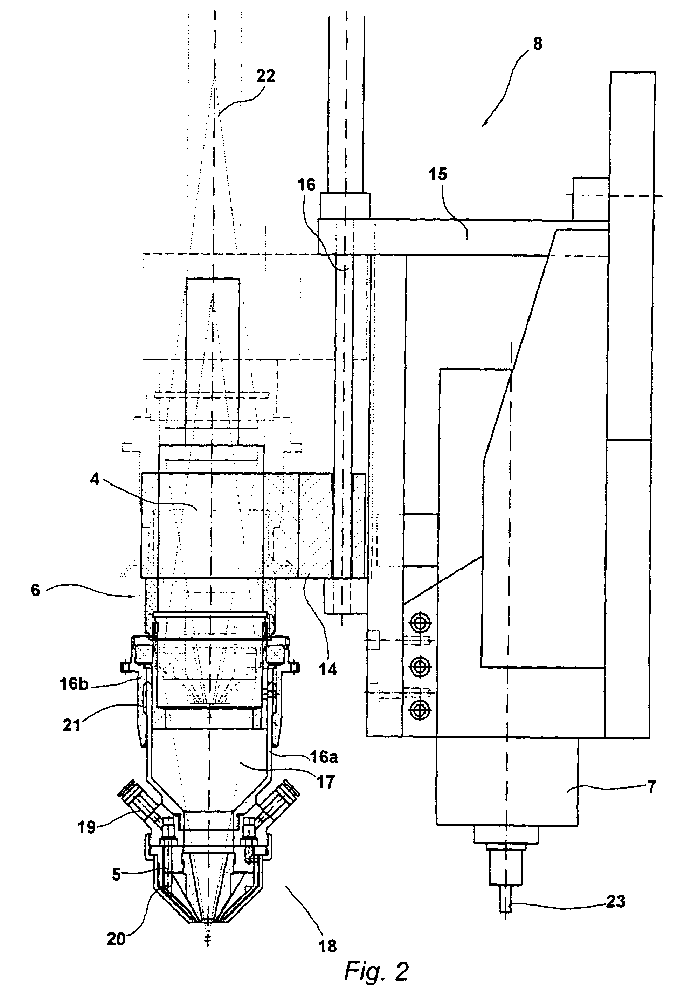

Wie in Fig. 1 und 2 zu sehen ist, sind der Laserstrahl-Fokussierkopf 4 und der Pulverkopf 5 zueinander koaxial angeordnet und bilden eine integrale Beschichtungseinheit, die allgemein mit der Bezugsziffer 6 bezeichnet wird. Die Zerspanungsvorrichtung 3 besitzt einen Zerspanungskopf 7, in den verschiedene Fräs- und Schleifwerkzeuge, wie z.B. Stirn-, Schaft- und Kugelkopffräser oder Schleifscheiben und -stifte, einspannbar sind, um die Oberfläche der aufgebrachten Schichten nachzubearbeiten.

Der Zerspanungskopf 7 und die Beschichtungseinheit 6 sind zusammen an einer Haltevorrichtung, die allgemein mit der Bezugsziffer 8 bezeichnet wird, gelagert und werden durch diese relativ zu dem Werkstück 1 geführt. Die Haltevorrichtung 8 ist relativ zu einem Werktisch 9, auf dem das Werkstück 1 aufliegt, entlang dreier Achsen verstellbar. Hierzu ist eine Portallagerungsvorrichtung 10 vorgesehen, an der die Haltevorrichtung 8 gelagert ist. Die Portallagerungsvorrichtung 10 weist ein Paar Vertikalstreben lla und llb auf, zu denen der Werktisch 9 entlang einer x-Achse relativ verschieblich gelagert und durch einen nicht dargestellten Antrieb verfahrbar ist. An den beiden Vertikalstreben lla und llb ist eine Traverse 12 gelagert, an der wiederum eine Vertikalführung 13 entlang einer y-Achse verschieblich gelagert ist, die durch einen ebenfalls nicht dargestellten Antrieb verfahrbar ist. Die Haltevorrichtung 8 ist an einem Schlitten 14 befestigt, der entlang der Vertikalführung 13 in Richtung einer z-Achse verschieblich gelagert ist und durch einen ebenfalls nicht dargestellten Antrieb verfahrbar ist.

Da der Aufbau des Werkstücks 1 in Schichten erfolgt, d.h. sowohl das Aufbringen einer Schicht durch Aufschmelzen von metallhaltigem Pulver als auch die spanende Nachbearbeitung der Schicht jeweils in einer zur xy-Ebene parallelen Ebene erfolgen, ist die Haltevorrichtung 8 zum Aufbau einer Schicht und deren Nachbearbeitung in der x- und der y-Richtung relativ zu dem Werkstück 1 zu verfahren. Für den Aufbau einer weiteren Schicht wird die Haltevorrichtung 8 entlang der z-Achse nach oben verstellt.

Obwohl gemäß dem gezeigten Ausführungsbeispiel die Haltevorrichtung 8 relativ zu dem Werktisch 9 entlang dreier Achsen verstellbar ist, ist es jedoch ebenfalls möglich die Haltevorrichtung 8 und den Werktisch 9 relativ zueinander fünfachsig verstellbar zu lagern, um kompliziertere Werkstückgeometrien einfacher fertigen zu können.

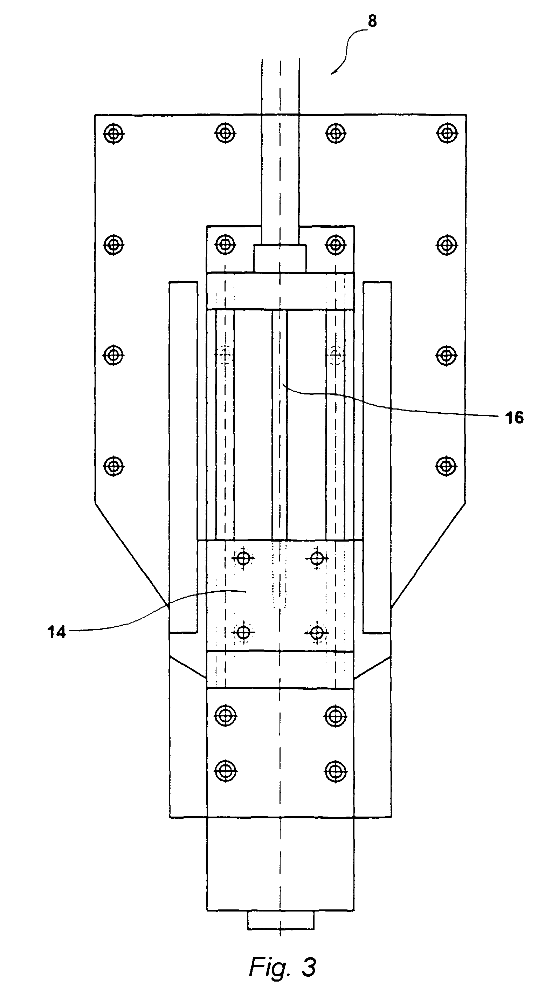

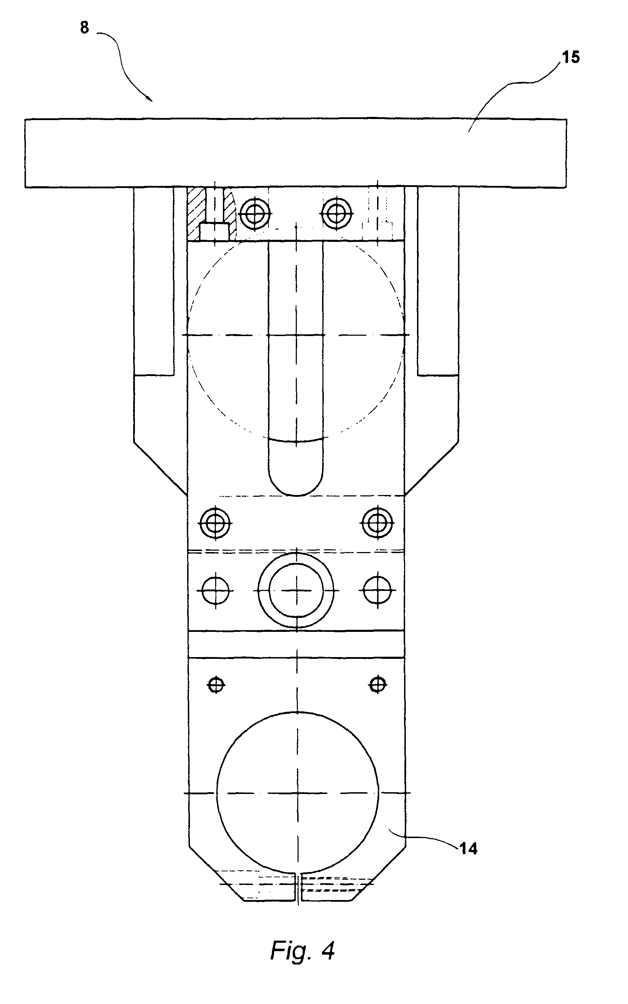

Wie in Fig. 2 zu sehen ist, ist die Beschichtungseinheit 6 mit dem Laserstrahl-Fokussierkopf 4 und dem Pulverkopf 5 durch die Haltevorrichtung 8 relativ zu dem Zerspanungskopf 7 entlang einer Achse z2 verstellbar gelagert und durch einen nicht dargestellten Antrieb verfahrbar. Hierfür weist die Haltevorrichtung 8, wie in den Fig. 3 und 4 zu sehen ist, ein verstellbares Halteteil 14 auf, das an einem Halterahmen 15 der Haltevorrichtung 8 verschieblich gelagert ist. Zur Verstellung des Halteteils 14 ist mit diesem ein Übertragungsglied 16 verbunden, das Teil eines Antriebs wie beispielsweise einer hydraulischen Kolben-Zylindereinheit ist, mit der die Beschichtungseinheit 6 relativ zu dem Zerspanungskopf 7 verfahren wird.

Insbesondere kann hierdurch die Beschichtungseinheit 6 nach oben aus einem Kollisionsbereich verfahren werden, um die Beschichtungseinheit 6 auf einen Sicherheitsabstand zu bringen, wenn mit dem Zerspanungskopf 7 eine aufgebrachte Schicht des Werkstücks 1 nachbearbeitet wird.

Wie in Fig. 2 zu sehen ist, sind der Laserstrahl-Fokussierkopf 4 und der Pulverkopf 5 durch ein hohlzylindrisches Verbindungsteil 16 miteinander verbunden, derart, daß der Laserstrahl-Fokussierkopf 4 und der Pulverkopf 5 zueinander koaxial angeordnet sind. Ein den Fokussierkopf 4 verlassender Laserstrahl 17 wird durch das hohlzylindrische Verbindungsteil 16 hindurch und durch eine zentrische Aussparung 18 in dem Pulverkopf 5 hindurch auf das Werkstück 1 geführt. Der Pulverkopf 5 weist an einer Umfangsseite Anschlußabschnitte 19 auf, über die der Pulverkopf mit Leitungen einer nicht dargestellten Pulverfördervorrichtung verbunden ist. Die Anschlußabschnitte 19 des Pulverkopfes 5 sind mit Pulverkanälen 20, die in dem Pulverkopf 5 ausgebildet sind, verbunden.

Durch konzentrisch zu dem Laserstrahl 17 angeordnete Austrittsöffnungen der Pulverkanäle 20 wird das Pulver koaxial zu dem Laserstrahl 17 in dessen Schmelzbereich zugeführt, um in dem Schmelzbereich aufgeschmolzen zu werden. Zusätzlich besitzt der Pulverkopf 5 Schutzgaskanäle, die mit entsprechenden Anschlußabschnitten an dem Pulverkopf 5 verbunden sind (jedoch nicht dargestellt sind), um für den Aufschmelzvorgang Schutzgas zuzuführen und den Pulverstrahl zu bündeln.

Die koaxiale Zuführung des Pulvers in den Schmelzbereich des Laserstrahls ermöglicht ein stabiles Aufschmelzen des Pulvers, auch wenn, wie später noch näher beschrieben werden wird, Spuren mit relativ geringer Dicke und Breite in einem Bereich von etwa 0,1 mm bzw. 0,3 bis 0,4 mm aufgebracht werden.

Um das Aufschmelzen des Pulvers in dem Schmelzbereich des Lasers steuern zu können, ist der Pulverkopf 5 relativ zu dem Laserstrahl-Fokussierkopf in Richtung des Laserstrahls verstellbar. Hierfür weist das Verbindungsteil 16 eine Feinverstelleinrichtung 21 auf, die den Pulverkopf 5 entlang der Achse z2' von dem Fokussierkopf 4 weg- und auf diesen zubewegt. Im gezeigten Ausführungsbeispiel gemäß Fig. 2 weist die Feinverstelleinrichtung 21 eine Gewindeverbindung auf, durch die ein erster Verbindungsteilabschnitt 16a relativ zu einem zweiten Verbindungsteilabschnitt 16b verstellbar ist, so daß sich die insgesamte Länge des Verbindungsteiles 16 verstellen läßt. Dies kann durch manuelles Verdrehen des Verbindungsteilabschnittes 16a erfolgen. Es ist jedoch ebenfalls möglich, obwohl dies in dem Ausführungsbeispiel gemäß Fig. 2 nicht dargestellt ist, zur Verstellung einen numerisch gesteuerten Antrieb vorzusehen, durch den der Pulverkopf 5 automatisch relativ zu dem Laserstrahl-Fokussierkopf 4 verstellbar ist.

Die Verstellbarkeit zwischen dem Pulverkopf 5 und dem Laserstrahl-Fokussierkopf 4 gestattet es auch, das Pulver in Spuren unterschiedlicher Breite aufzuschmelzen. Um einen größeren Materialauftrag zu erzielen, d.h. das Pulver in breiteren und dickeren Spuren aufzuschmelzen, wird der Laserstrahl defokussiert, um den Schmelzbereich zu vergrößern. Hierzu wird der Laserstrahl-Fokussierkopf 4 entlang der z2 Achse relativ zu der Haltevorrichtung 8 nach oben von dem Werkstück 1 wegbewegt, so daß sich der Abstand zwischen dem Laserstrahl-Fokussierkopf 4 und dem Werkstück 1 vergrößert. Gleichzeitig wird der Pulverkopf 5 relativ zu dem Fokussierkopf 4 durch die Feinverstelleinrichtung 21 entlang der Achse z2' nach unten bewegt, um die Verstellung des Fokussierkopfes 4 auszugleichen und das Pulver genau in den Schmelzbereich des Laserstrahles 17 zuzuführen. Auf diese Weise können Schichten mit hohen Auftragsraten und gleichzeitig dennoch mit einer hohen Konturgenauigkeit, wie später noch erläutert werden wird, aufgebaut werden.

Der Laserstrahl-Fokussierkopf 4 ist, wie in den Fig. 1 und 2 zu sehen ist, mit einem Lichtwellenleitfaserkabel 22 verbunden, durch das der Laserstrahl von einer nicht dargestellten Laserquelle zu dem Laserstrahl-Fokussierkopf 4 geführt wird. Als Laserquelle ist vorzugsweise ein Nd-YAG-Laser vorgesehen. Durch die Führung des Laserstrahls mittels dem Lichtwellenleitfaserkabel 22 kann die Beschichtungseinheit 6 in einfacher Weise bewegt werden, ohne daß aufwendige Umlenkspiegelvorrichtungen nötig sind. Die Führung des Laserstrahls durch Umlenkspiegelvorrichtungen ist, wie später noch beschrieben werden wird, vorzugsweise in Verbindung mit einem CO₂-Laser als Laserquelle einzusetzen.

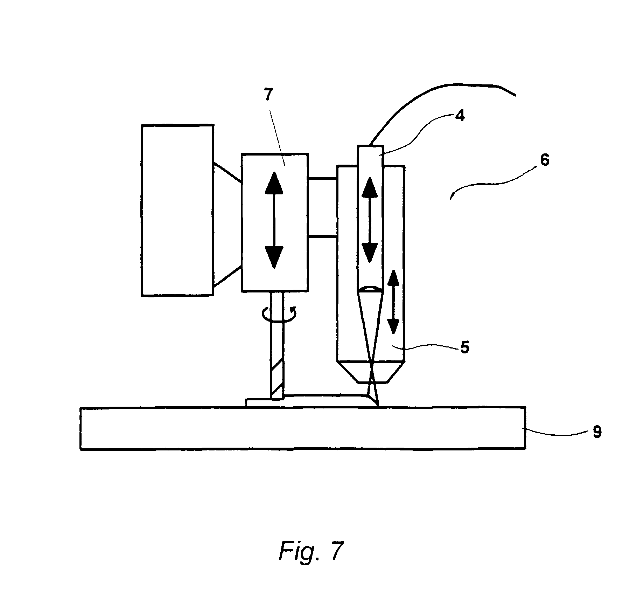

Die Kinematik der Haltevorrichtung 8 für den Zerspanungskopf 7 und die Beschichtungseinheit 6 ist in der schematischen Darstellung gemäß Fig. 7 verdeutlicht. Der Zerspanungskopf 7 und die Beschichtungseinheit 6, die axial versetzt zueinander angeordnet sind, sind gemeinsam senkrecht zu dem Werktisch 9 verstellbar, um entsprechend der bereits aufgebrachten Schichten und einer einzustellenden Schichtdicke den Aufbau eines Werkstücks von unten nach oben zu ermöglichen. Darüber hinaus ist die Beschichtungseinheit 6 als Ganzes relativ zu dem Zerspanungskopf 7 verstellbar. Hierbei ist der Pulverkopf 5 wiederum relativ zu dem Laserstrahl-Fokussierkopf 4 verstellbar.

In den Zerspanungskopf 7 sind verschiedenen Fräs- und Schleifwerkzeuge 23 einspannbar, die durch einen nicht dargestellten Antrieb der Zerspanungsvorrichtung 3, der vorzugsweise eine ebenfalls nicht dargestellte elektrische Hochgeschwindigkeitsspindel aufweist, mit einer Drehzahl im Bereich von 10 x 10³ U/min - 60 x 10³ U/min antreibbar sind. Dadurch können auch sehr feine Fräs- bzw. Schleifwerkzeuge verwendet werden, um die Oberfläche der aufgeschmolzenen Schichten, insbesondere an deren Konturseite, fein nachzubearbeiten.

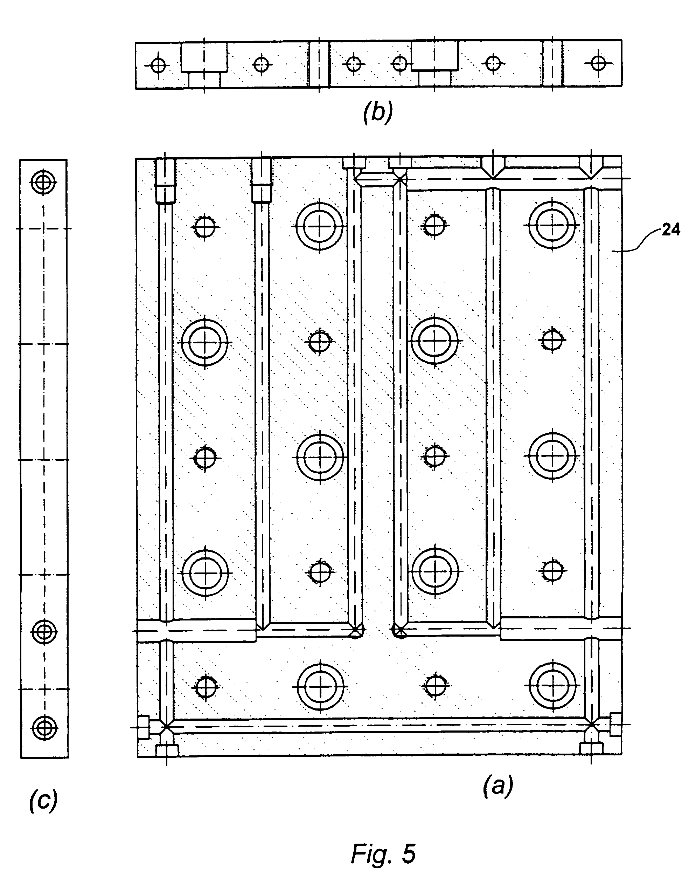

Ein nicht unwesentlicher Aspekt bei der Prozeßführung für den schichtweisen Aufbau des Werkstücks 1 durch Aufschmelzen des Pulvers ist die Temperatur des Werkstücks 1. Um die Einstellung der Parameter für den Beschichtungsvorgang zu erleichtern, ist eine Kühlvorrichtung vorgesehen, die das Werkstück 1 kühlt und im wesentlichen auf einer konstanten Temperatur hält. Wie in Fig. 1 zu sehen ist, ist auf dem Werktisch 9 eine Kühlplatte 24 vorgesehen, auf der das Werkstück 1 aufliegt. In der Kühlplatte 24 sind, wie in Fig. 5 dargestellt ist, eine Mehrzahl von Kühlmittelkanälen 25 ausgebildet, durch die Kühlflüssigkeit zirkuliert. Darüber hinaus ist ein in den Figuren nicht dargestelltes Temperaturmeßsystem vorgesehen, das vorzugsweise ein Pyrometer aufweist. Dieses Temperaturmeßsystem erfaßt nach dem Zerspanen einer Schicht eine Oberflächentemperatur des Werkstücks 1. Der weitere Aufbau des Werkstücks wird erst dann fortgeführt, wenn die erfaßte Temperatur einen vorgegebenen Wert nicht übersteigt. Vorzugsweise liegt diese Temperatur werkstoffabhängig zwischen 20° und 100°C. Diese indirekte Prozeßregelung, die von der Prozeßsteuerung unterstützt wird, besitzt den Vorteil, daß jede Schicht unter gleichen Bedingungen erstellt wird.

Um einen Arbeitsbereich herum, d.h. um den Bereich herum, in dem das Werkstück schichtweise aufgebaut, das Pulver aufgeschmolzen und die Schichten spanend nachbearbeitet werden, ist eine Absaugvorrichtung 26 vorgesehen, die überschüssiges Pulver oder durch den Aufschmelzvorgang erzeugte Rückstände absaugt.

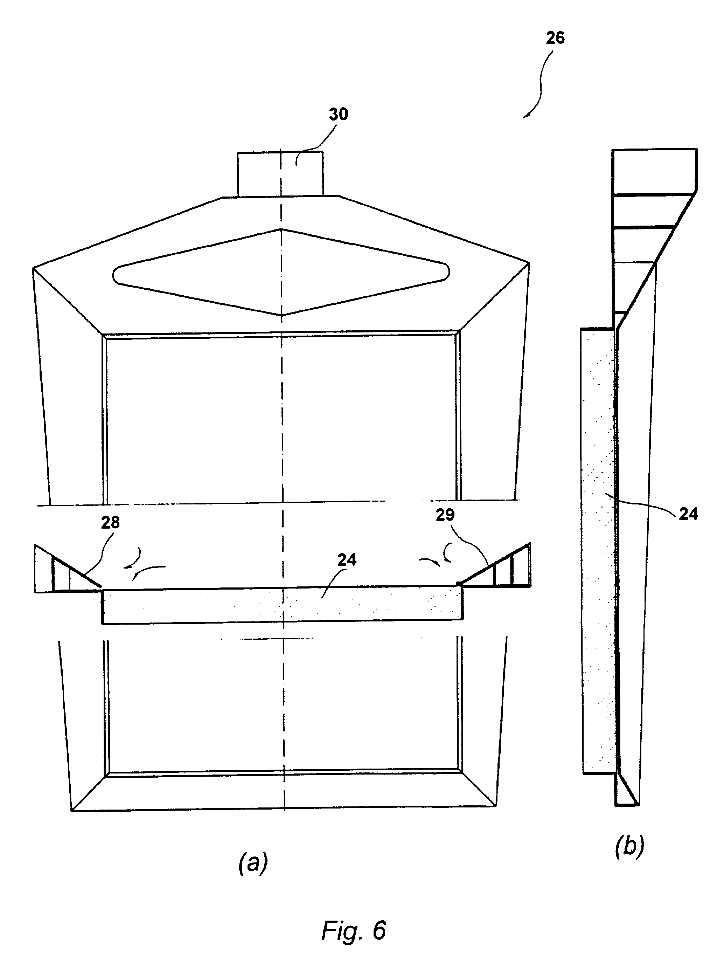

Gemäß Fig. 6 weist die Absaugvorrichtung 26 einen Absaugrahmen 27 auf, der um die Kühlplatte 24 herum verläuft. Der Absaugrahmen 27 wird im wesentlichen durch ein Hohlprofil gebildet, das einen dreieckigen Querschnitt besitzt. Entlang einer umlaufenden Kante der Kühlplatte 24 besitzt der Absaugrahmen 27 eine umlaufende Absaugöffnung, durch die überschüssiges Pulver von der Oberfläche der Kühlplatte 24 in das Innere des Absaugrahmens 27 eingesaugt wird. Der Absaugrahmen 27 ist derart angeordnet, daß eine Rahmenoberfläche 29 von der umlaufenden Kante der Kühlplatte 24 ausgehend, sich schräg nach außen und nach oben geneigt erstreckt, so daß überschüssiges Pulver auf der Rahmenoberfläche 29 zurück auf die Kühlplatte 24 gleitet und durch die Absaugöffnung 28 in das Innere des Absaugrahmens 27 eingesaugt wird.

An einer Seite des Absaugrahmens 27 ist ein Absaugrohranschluß 30 vorgesehen, an den ein Saugrohr der Absaugvorrichtung 28 angeschlossen ist. Wie in Fig. 6 zu sehen ist weist der Absaugrahmen 27 eine sich ändernde Querschnittsfläche auf, die von dem Absaugrohranschluß 30 zu dem, bezogen auf den Absaugrohranschluß 30, entferntesten Abschnitt des Absaugrahmens 27 kontinuierlich abnimmt, um in jedem Bereich des Absaugrahmens 27 die für das Absaugen von Pulverpartikeln notwendige Strömungsgeschwindigkeit zu erzielen.

Das überschüssige Pulver und sonstige Rückstandspartikel können beispielsweise während des Laserbeschichtungsvorganges und/oder nach dem Laserbeschichtungsvorgang und/oder während der spanenden Nachbearbeitung abgesaugt werden. Da das abgesaugte Pulver mit ungeschmolzenen Körnern, Oxiden oder Spänen behaftet ist, ist in der Absaugvorrichtung eine Aufbereitungseinrichtung vorgesehen, die beispielsweise einen Zyklonenabscheider, der die Verunreinigungen abscheidet und/oder einen Feinstaubfilter aufweist, der Feinstaub von dem überschüssigen Pulver trennt. Das wiedergewonnene Pulver kann daraufhin wieder der Pulverzuführungsvorrichtung rückgeführt werden.

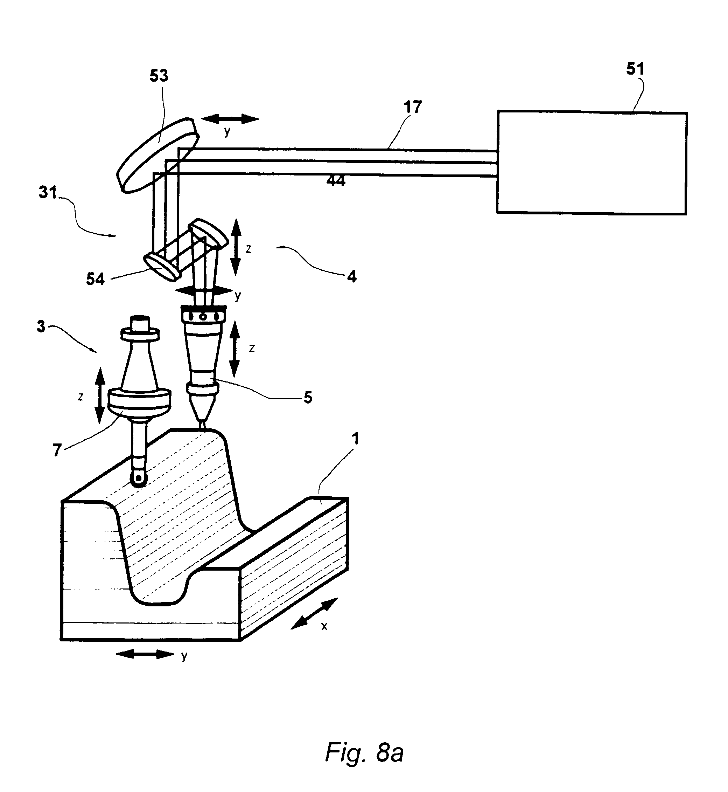

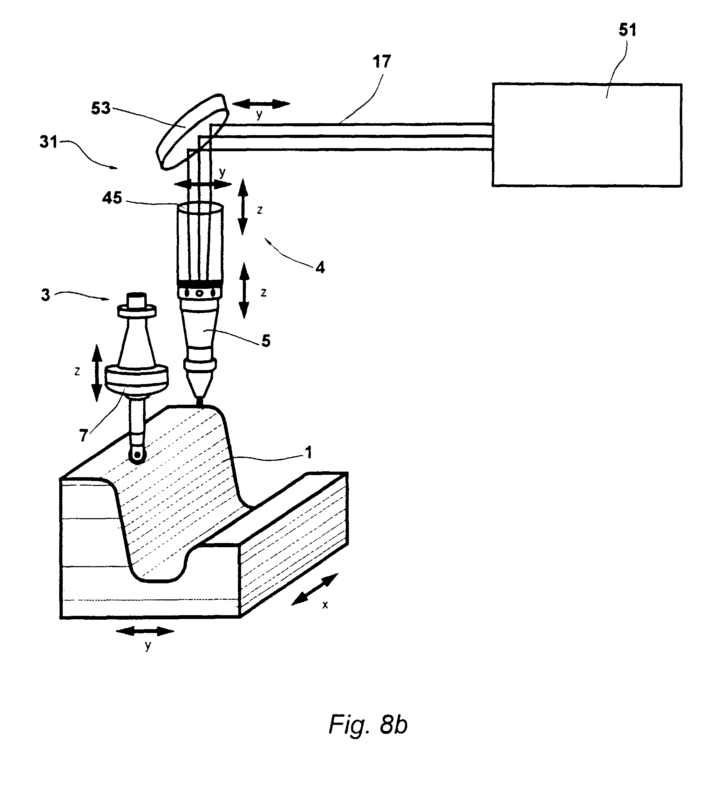

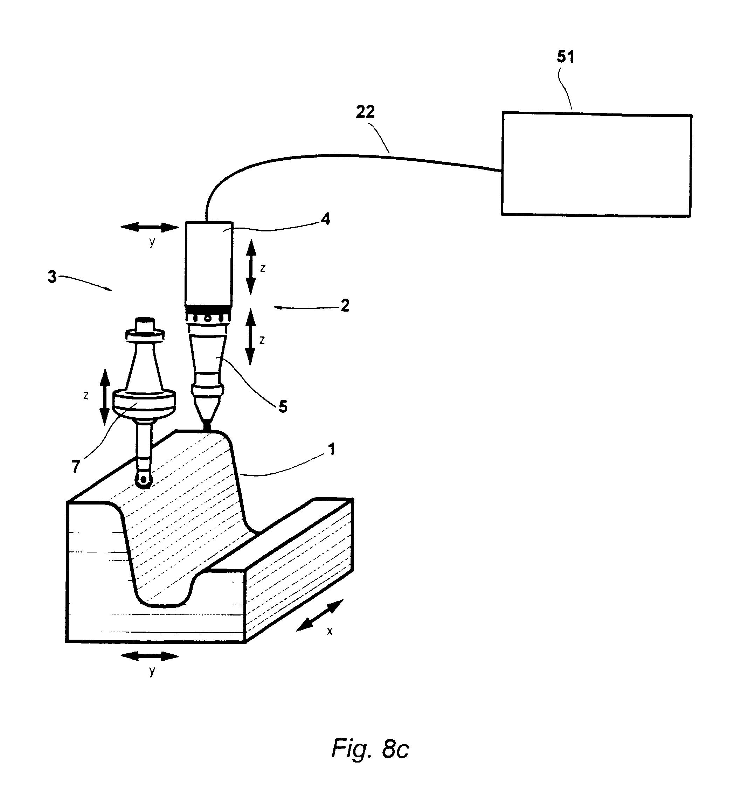

Während in dem gerade beschriebenen Ausführungsbeispiel die Laserquelle mittels eines Lichtwellenleitfaserkabels 22 mit dem Fokussierkopf verbunden ist, wird entsprechend weiteren Ausgestaltungen der Erfindung, die in Fig. 8a und 8b dargestellt sind, der Laserstrahl 17 mittels einer Umlenkspiegelvorrichtung 31 von der Laserquelle, die in Fig. 8 mit der Bezugsziffer 51 gekennzeichnet ist, zu dem Werkstück 1 geführt.

Wie in Fig. 8a gezeigt ist, weist die Umlenkspiegelvorrichtung 31 einen ersten Umlenkspiegel 53 und einen zweiten Umlenkspiegel 54 auf, die den Laserstrahl zu dem Fokussierkopf 4 führen, der gemäß dem gezeigten Ausführungsbeispiel einen Fokussierspiegel 44 aufweist.

Ein weiteres Ausführungsbeispiel mit einer Umlenkspiegelvorrichtung 31 ist in Fig. 8b dargestellt. Die Umlenkspiegelvorrichtung 31 weist lediglich einen ersten Umlenkspiegel 53 auf, der den aus der Laserquelle 51 austretenden Laserstrahl 17 direkt zu dem Fokussierkopf 4 lenkt, der gemäß diesem Ausführungsbeispiel eine Fokussierlinse 45 besitzt. Als Laserquelle 51 ist wie im Ausführungsbeispiel nach Fig. 8a ein CO₂-Laser vorgesehen.

Um die zur Herstellung des Werkstücks 1 notwendige Relativbewegung zwischen dem Laserstrahl-Fokussierkopf 4, dem Pulverkopf 5, dem Zerspanungskopf 7 und dem Werkstück 1 zu gewährleisten, sind verschiedene Achsverteilungen möglich.

Zum einen kann das Werkstück entlang einer x- und y-Achse verschieblich sein, so daß der Fokussierkopf 4, der Pulverkopf 5 und der Zerspanungskopf 7 nur in Richtung einer z-Achse verschieblich sind. Hierbei ist der Pulverkopf 5 relativ zu dem Fokussierkopf 4, d.h. relativ zu dem Fokussierspiegel 44 bzw. der Fokussierlinse 45 entlang der z-Achse verstellbar. Der Umlenkspiegel 53 benötigt bei dieser Ausführungsform keine Beweglichkeit und ist starr gelagert.

Zum andern kann das Werkstück nur entlang der x-Richtung verfahrbar sein, wobei dann der Fokussierkopf 4, der Pulverkopf 5 und der Zerspanungskopf 7 sowohl entlang der y-Achse als auch der z-Achse verschieblich sind. Der Umlenkspiegel 53 ist ebenfalls entlang der y-Achse verschieblich.

Wenn hingegen das Werkstück dreiachsig, d.h. entlang der x-Achse, der y-Achse und der z-Achse verschiebbar ist, ist es ausreichend, daß der Pulverkopf 5 entlang der z-Achse verstellbar ist. Diese Verstellbarkeit des Pulverkopfes, relativ zu dem Fokussierkopf 4, ist notwendig, um die Pulverzuführung stets exakt in den Schmelzbereich des Laserstrahls 17 zu richten. Bei einer derartigen Achsverteilung sind keine Umlenkspiegel 53 oder 54 notwendig, um den Laserstrahl auf das Werkstück 1 zu führen. Es ist vielmehr ausreichend, einen Fokussierspiegel 44 bzw. eine Fokussierlinse 45 vorzusehen, die jeweils starr gelagert sind.

Darüber hinaus ist es ebenfalls möglich, das Werkstück 1, d.h. den Werktisch 9 unverschieblich zu lagern, während der Fokussierkopf 4, der Pulverkopf 5 und der Zerspanungskopf 7 entlang sowohl der x-Achse, der y-Achse als auch der z-Achse verfahrbar sind. Auch bei dieser Ausführungsform ist der Pulverkopf 5 relativ zu dem Fokussierkopf 4 entlang der z-Achse verstellbar.

In Fig. 8c ist eine Ausführungsform der erfindungsgemäßen Vorrichtung ähnlich der mit Bezug auf die Fig. 1 - 7 beschriebenen Ausführungsform dargestellt. Als Laserquelle 51 ist ein Nd-YAG-Laser vorgesehen, von der ausgehend ein Laserstrahl mittels eines Lichtwellenleitfaserkabels 22 zu dem Laserstrahl-Fokussierkopf 4 geführt wird. Auch bei dieser Ausführungsform sind unterschiedliche Achsverteilungen möglich. Zum einen kann das Werkstück 1 entlang der x-Achse und der y-Achse verfahrbar gelagert werden, während der Fokussierkopf 4 und der Pulverkopf 5 jeweils (und relativ zueinander), entlang der z-Achse verschieblich gelagert sind. Der Zerspanungskopf 7 ist ebenfalls entlang der z-Achse verfahrbar gelagert.

Wenn das Werkstück 1 nur entlang der x-Achse verfahrbar ist, sind der Zerspanungskopf 7, der Pulverkopf 5 und der Laserstrahl-Fokussierkopf 4 sowohl entlang der y-Achse als auch der z-Achse verfahrbar.

Zum anderen kann das Werkstück 1 entlang der drei Achsen x, y und z verfahrbar gelagert sein, so daß in dieser Ausführungsform nur der Pulverkopf 5 entlang der z-Achse verfahrbar ist. Der Laserstrahl-Fokussierkopf 4 und der Zerspanungskopf 7 können starr gelagert sein.

Wenn das Werkstück 1, d.h. der Werktisch 9 hingegen starr gelagert sind, sind in diesem Falle der Zerspanungskopf 7, der Laserstrahl-Fokussierkopf 4 und der Pulverkopf 5 entlang der x-Achse, der y-Achse und der z-Achse verfahrbar. Allen Ausführungsformen gemeinsam ist, daß der Pulverkopf 5 relativ zu dem Laserstrahl-Fokussierkopf 4, nämlich entlang der z-Achse, verschieblich ist.

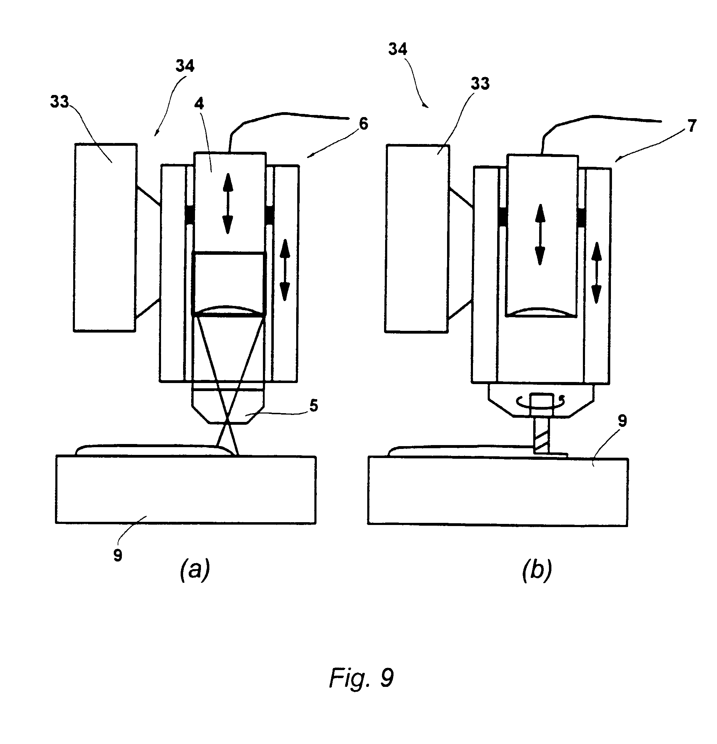

Ein weiteres bevorzugtes Ausführungsbeispiel der Erfindung ist in Fig. 9 dargestellt. Die darin gezeigte Vorrichtung unterscheidet sich von den zuvor beschriebenen Ausführungsbeispielen im wesentlichen dadurch, daß der Zerspanungskopf 7 und die Beschichtungseinheit 6 nicht axial zueinander versetzt gleichzeitig an einer Haltevorrichtung gelagert sind, sondern daß die Haltevorrichtung, die in diesem Ausführungsbeispiel allgemein mit der Bezugsziffer 34 bezeichnet ist, eine Werkzeugwechselvorrichtung 33 aufweist, in die wahlweise die Beschichtungseinheit 6 oder der Zerspanungskopf 7 eingespannt werden können. Die Werkzeugwechselvorrichtung 33 und die Beschichtungseinheit 6 bzw. der Zerspanungskopf 7 sind dabei derart ausgestaltet, daß der Zerspanungskopf 7 koaxial zu dem Laserstrahl-Fokussierkopf 4 bzw. dem Pulverkopf 5 angeordnet ist, wenn diese jeweils in die Werkzeugwechselvorrichtung 33 eingespannt sind. Die koaxiale Anordnung der Beschichtungseinheit 6 und des Zerspanungskopfes 7 erleichtert die spanende Nachbearbeitung der aufgeschmolzenen Schichten und vermindert insbesondere den Programmieraufwand für die Zerspanungsbearbeitung. Ferner ist es besonders von Vorteil, daß der zur Verfügung stehende Arbeitsbereich bestmöglich ausgenutzt wird

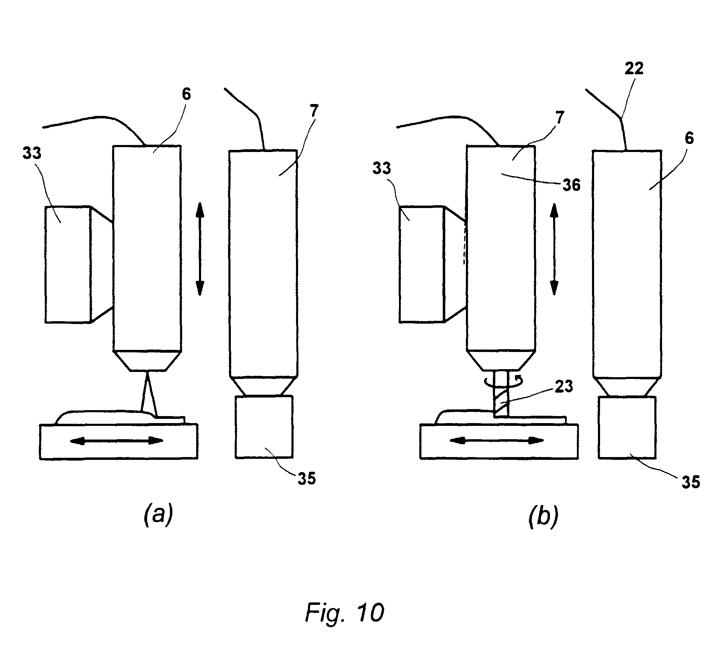

Wie in Fig. 10 gezeigt ist, wird das gerade nicht benötigte Werkzeug, d.h. während des Beschichtungsvorganges der Zerspanungskopf 7 und während der Nachbearbeitung die Beschichtungseinheit 6 in einer Werkzeugaufnahme 35 abgestellt, während das andere der beiden jeweils in die Werkzeugwechselvorrichtung 33 eingespannt ist. Die Zerspanungsvorrichtung 3 weist gemäß diesem Ausführungsbeispiel eine Druckluftspindel 36 zum Antrieb des Fräs- bzw. Schleifwerkzeuges 23 auf. Bauteile oder Komponenten dieses Ausführungsbeispieles, die im wesentlichen denen des ersten Ausführungsbeispieles entsprechen, sind mit denselben Bezugsziffern bezeichnet. Eine weitere Erläuterung erscheint nicht notwendig.

Um eine Sollhöhe einer jeden aufgebrachten Schicht zu erfassen, ist bei allen zuvor beschriebenen Ausführungsformen eine entsprechende, in den Figuren nicht explizit dargestellte Erfassungsvorrichtung vorgesehen, die insbesondere einen Abstandssensor aufweist, der den Abstand der Oberseite der zuletzt aufgebrachten Schicht von einem Referenzpunkt mißt. Dieser Meßvorgang kann während der spanenden Bearbeitung kontinuierlich oder nach der spanenden Bearbeitung punktuell durchgeführt werden. Wenn die Sollhöhe nicht erreicht wird, erfolgt ein erneuter Beschichtungsvorgang entsprechend der Geometrie der zuletzt aufgebrachten Schicht. Falls die zu erzeugende Geometrie, d.h. die Sollhöhe nach einem erneuten bzw. nach mehrmaligen Beschichtungsvorgängen nicht erreicht wird, wird Alarm ausgelöst und der Herstellungsprozeß angehalten, um zuerst entsprechende Fehlerursachen zu beheben, bevor der Herstellungsprozeß erneut gestartet wird.

Jede der zuvor beschriebenen Vorrichtungen gemäß den verschiedenen Ausführungsbeispielen der Erfindung weist ferner eine elektronische Steuereinrichtung zur Steuerung der Beschichtungseinrichtung und der Zerspanungsvorrichtung auf. Die Steuereinrichtung besitzt eine Schnittstelle, um CAD-Geometriedaten eines CAD-Modells des herzustellenden Werkstücks, die auf einer CAD-Einheit generiert wurden, zu übernehmen. Die Steuereinrichtung erzeugt auf der Grundlage dieser CAD-Geometriedaten und weiterer manuell eingegebener Daten, durch die Optionen in der Prozeßführung festgelegt werden, selbständig ein Bearbeitungsprogramm zur Ansteuerung der Beschichtungseinrichtung und der Zerspanungsvorrichtung. Hierdurch wird die Herstellung des Werkstücks in hohem Maße automatisiert. Grundsätzlich können die NC-Daten zur Steuerung der Beschichtungseinrichtung und der Zerspanungsvorrichtung auf zwei unterschiedlichen Wegen erzeugt werden. Entsprechend einer ersten Ausführungsform werden mittels der CAD-Einheit zwei verschiedene CAD-Modelle generiert, von denen eines der Sollgeometrie des herzustellenden Werkstücks entspricht und für die spanende Nachbearbeitung verwendet wird und ein zweites dem herzustellenden Werkstück mit größeren Maßen entspricht, das für den Beschichtungsprozeß verwende wird. Gemäß einer zweiten Ausführungsform wird nur ein einziges CAD-Modell generiert, wobei bei der Erstellung der NC-Daten zur Ansteuerung der Beschichtungseinrichtung, d.h. für den Beschichtungsvorgang, eine fiktive Werkzeugdurchmesserkorrektur definiert wird, so daß jeweils eine breitere Schicht aufgebracht wird. Bei der spanenden Nachbearbeitung wird dann das tatsächliche Werkzeug definiert, so daß die Sollgeometrie erreicht wird.

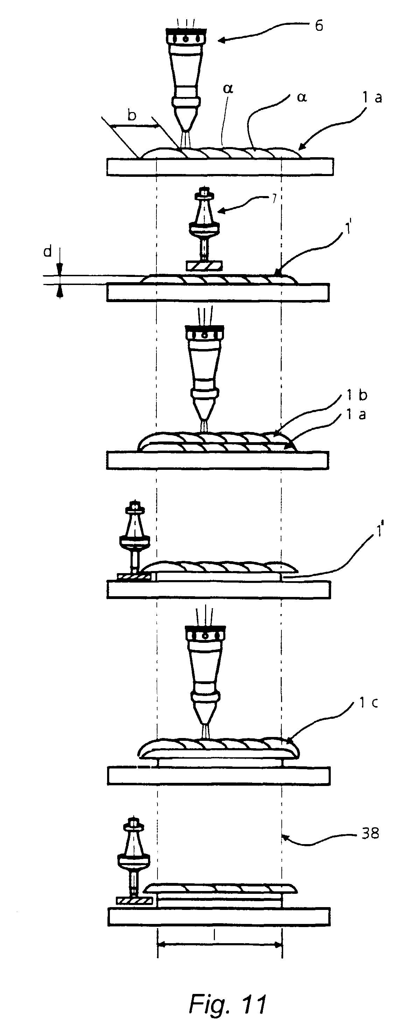

Im folgenden sollen die Funktion und die Wirkungsweise der Vorrichtung der zuvor beschriebenen Ausführungsbeispiele und bevorzugte Ausgestaltungen des erfindungsgemäßen Verfahrens zur Herstellung von metallischen Werkstücken, insbesondere mit Bezug auf die Fig. 11 - 16, näher erläutert werden.

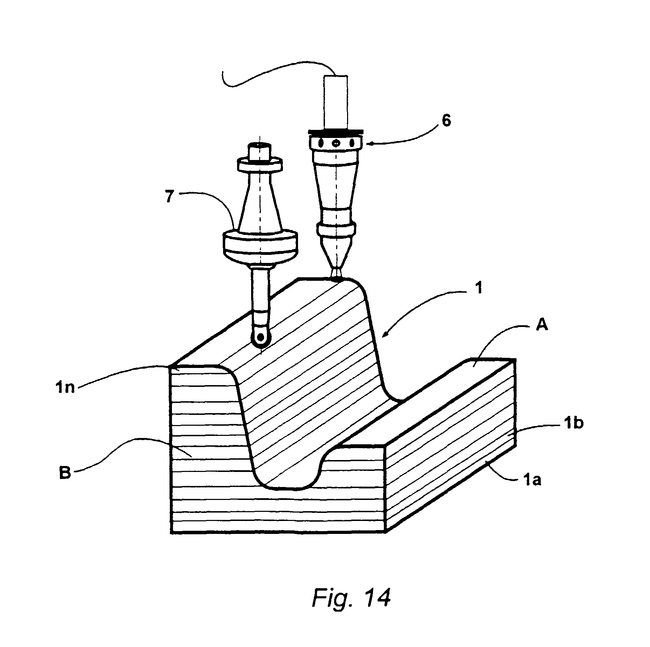

Wie allgemein in Fig. 14 zu sehen ist, wird das Werkstück aus Schichten 1a, 1b... 1n aufgebaut, indem mit der Beschichtungseinheit 6 metallhaltiges Pulver schichtweise aufgeschmolzen wird. Die Schichten 1a, 1b bis 1n werden jeweils einzeln oder auch zu mehreren gleichzeitig spanend nachgearbeitet. Diese schichtweise Nachbearbeitung reduziert die Fräs- bzw. Schleifbearbeitung auf eine zweidimensionale Bearbeitung mit gleichbleibenden Zerspanbedingungen, was die Nachbearbeitung wesentlich erleichtert und insbesondere den Programmieraufwand beträchtlich verringert. Darüber hinaus wird die Kollisionsgefahr reduziert und die Bearbeitung von dünnen und schlanken tiefen Aussparungen vermieden.

Eine einzelne Schicht wird wie in Fig. 11 zu sehen ist, erzeugt, indem mehrere Spuren nebeneinander aufgeschmolzen werden. Die Anzahl der Spuren variiert je nach der herzustellenden Wandstärke des Werkstücks 1 an der Stelle dieser Schicht, d.h. je nach der Breite 1 der zu erzeugenden Schicht und reduziert sich im Grenzfall bis zu einer einzigen Spur.

Um bereits beim Aufschmelzen der einzelnen Schichten eine hohe Formgenauigkeit zu erzielen, werden die Spuren bei einer Laserleistung, die kleiner 1 kW ist, mit einer Breite b im Bereich von 0,1 mm - 1 mm, vorzugsweise im Bereich von 0,2 mm- 0,5 mm und einer Dicke d im Bereich von 0,05 mm - 0,5 mm, vorzugsweise im Bereich von 0,05 mm - 0,2 mm aufgebracht.

Nach Aufbringen der ersten Schicht 1a wird vor dem Aufschmelzen einer weiteren Schicht die erste Schicht 1a an ihrer Oberseite 1' plangefräst, derart, daß die Schicht 1a eine definierte Schichtdicke d besitzt. Hierzu wird ein Grobfräswerkzeug verwendet, um hohe Zerspanleistungen zu erreichen. Während vor dem Aufschmelzen einer weiteren Schicht die Oberseite 1' der ersten Schicht 1a bearbeitet wird, bleibt die Schicht 1a an ihren Konturseiten 1" unbearbeitet, so daß die erste Schicht zunächst noch über eine Sollkontur 38 hinausragt.

In einem nächsten Verfahrensschritt wird eine weitere Schicht 1b auf die planbearbeitete Oberseite 1' der ersten Schicht 1a aufgeschmolzen, wobei die Schicht wiederum in mehreren Spuren α aufgebaut wird. Die zweite Schicht 1b steht ebenfalls über die Sollkontur 38 hinaus. In einem darauf erfolgenden Verfahrensschritt wird die erste Schicht 1a an ihrer Konturseite 1" nachbearbeitet, wobei in diesem Schritt die erste Schicht la auf die Sollkontur 38 gefräst bzw. geschliffen wird. Die Konturseite der zweiten Schicht 1b bleibt unbearbeitet.

Die Konturseite 1" der Schichten wird mit einem Feinfräs- oder Schleifwerkzeug feinbearbeitet, um eine hohe Formgenauigkeit und Oberflächengüte an der Konturseite 1" zu erzielen. Das Feinfräs- oder Schleifwerkzeug wird hierbei mit einer Drehzahl im Bereich von 10 x 10³ bis 60 x 10³ rotiert.

Vor dem Aufschmelzen einer weiteren Schicht wird die Oberseite der zweiten Schicht planbearbeitet, während jedoch die Konturseite der zweiten Schicht 1b unbearbeitet bleibt und erst dann nachbearbeitet wird, wenn die dritte Schicht 1c aufgeschmolzen ist. Dadurch, daß jeweils die vorletzte Schicht (oder mehrere vor der letzten Schicht aufgebrachte Schichten, was besonders bei Prozeßbeginn sehr wichtig ist) an einer Konturseite nachbearbeitet werden, steht die jeweils zuletzt aufgebrachte Schicht leicht über die Sollkontur 38 hinaus, so daß das Auftragen einer weiteren Schicht im Konturbereich erleichtert wird.

Wie in Fig. 12 zu sehen ist, wird eine einzelne Schicht in Spuren α unterschiedlicher Geometrie aufgebracht. Während in Randzonen A einer Schicht 1a Spuren β mit relativ geringer Breite b und geringer Dicke d aufgebracht werden, werden in einer Kernzone B der Schicht 1a Spuren α mit relativ größerer Breite b und größerer Dicke d aufgebracht. Ebenfalls können Schichten unterschiedlicher Dicke aufgebracht werden.

Auf diese Weise wird eine hohe Genauigkeit bei einer hohen Aufbauleistung erzielt, da die Schichtbereiche, nämlich die Kernzonen B, die keinen Einfluß auf die Geometrie- und Maßgenauigkeit haben, mit größeren Spuren, d.h. mit größerem Laserstrahldurchmesser, höherer Strahlleistung und größerer Pulvermenge erzeugt werden. Die für die Genauigkeit entscheidenden, äußeren und inneren Randzonen A einer Schicht werden hingegen mit kleineren Spuren β, d.h. genauer mit kleinerem Strahldurchmesser, kleinerer Strahlleistung und kleinerer Pulvermenge aufgebaut.

Wie in Fig. 12b zu sehen ist, kann die Schicht 1a in ihren Randzonen zunächst spanend nachbearbeitet werden, um eine definierte Randzonengeometrie zu erzielen, bevor in einem folgenden Schritt auf den nachbearbeiteten Konturbereich Spuren β geringer Dicke und Breite aufgebracht werden.

In einem zusätzlichen Verfahrensschritt wird gemäß einer bevorzugten Ausgestaltung des erfindungsgemäßen Verfahrens die Konturseite 1" einer gerade erstellten Schicht mit dem Laserstrahl 17 mit oder ohne Pulverzufuhr behandelt, um Konturabweichungen zu verbessern, die aus unterschiedlichen Füllstrategien resultieren können. Hierbei können unterschiedliche Laserstrahldurchmesser eingesetzt werden.

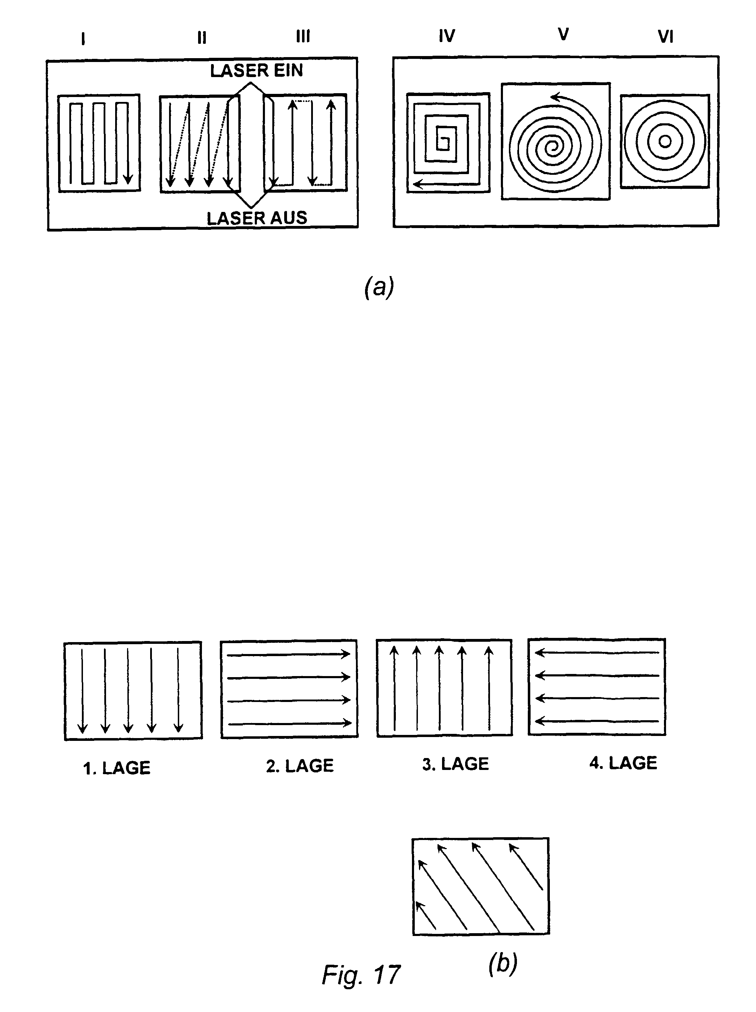

In den Kernzonen B unterschiedlicher Schichten werden, wie in Fig. 17b gezeigt ist, vorzugsweise Spuren α in verschiedenen Richtungen aufgebracht. Dies verbessert die Ebenheit der zu erzeugenden Schichten. Wie in Fig. 17a zu sehen ist, umfaßt das erfindungsgemäße Verfahren entsprechend bevorzugter Ausführungsformen verschiedene Füllungsstrategien, um in einem Kernbereich einer Schicht Spuren aufzubringen. Grundsätzlich kann hierbei, wie in den Beispielen I, IV und V gezeigt, kontinuierlich nach dem Plotterprinzip, als auch mit Ein- und Ausschalten der Lasereinheit am Anfang und am Ende einer Spur gearbeitet werden, wie dies in den Beispielen II und III nach Fig. 17a gezeigt ist.

Wie in Fig. 12c zu sehen ist, kann eine Schicht 1a zunächst auch in einer Randzone mit Spuren β geringer Dicke und Breite aufgebaut werden, bevor in einem darauffolgenden Schritt die Kernzone B mit größeren Spuren α erzeugt wird. In einem darauffolgenden Schritt wird dann der Konturbereich und die Oberseite der aufgebrachten Schicht spanend nachbearbeitet.

In Fig. 12d hingegen ist eine Ausführungsform des Verfahrens gezeigt, bei der eine Schicht einheitlich mit größeren Spuren α aufgebaut wird, wobei der Konturbereich und die Oberseite alleine durch die spanende Nachbearbeitung geformt wird.

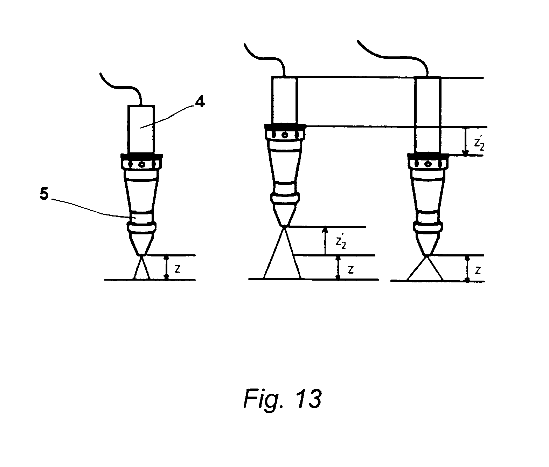

Für unterschiedliche Auftragsraten wird der Laserstrahldurchmesser im Schmelzbereich verändert, in dem der Laserstrahl-Fokussierkopf 4, wie in Fig. 13 gezeigt ist, relativ zu dem Werkstück 1 bewegt wird, so daß sich der Abstand zu dem Werkstück 1 ändert. Um den Laserstrahl zu defokussieren wird der Laserstrahl-Fokussierkopf 4 von dem Werkstück 1 wegbewegt. Der Pulverkopf 5 muß dabei relativ zu dem Fokussierkopf 4 entlang der Richtung des Laserstrahls verstellt werden, um das Pulver in den Schmelzbereich des Laserstrahls 17 zuzuführen, d.h. die Bewegung des Laserstrahl-Fokussierkopfes 4 muß durch eine Gegenbewegung des Pulverkopfes 5 kompensiert werden.

Wie in Fig. 14 dargestellt ist, werden Schichten und Spuren in einer Schicht aus unterschiedlichen Werkstoffen aufgebracht. Grundsätzlich werden metallische oder metallgebundene Keramikwerkstoffe in Pulverform aufgeschmolzen. Während in beanspruchten Randzonen A des Werkstücks 1 Schichten 1n und Spuren β in einer Schicht 1n aus hartem, verschleißfestem Werkstoff aufgebracht werden, wird in Kernzonen B des Werkstücks ein weichzäher Werkstoff aufgeschmolzen, so daß die Werkstückeigenschaften optimiert werden.

Die bislang beschriebene Herstellung von Werkstücken betraf vollwandige Werkstücke, bei denen die Kernzonen mit mehreren Spuren ausgefüllt werden. Für dünnwandige Hohlkörper werden nur Spuren im Konturbereich des Werkstücks aufgeschmolzen. Die zu erzeugende Wanddicke wird durch Anpassung der Spurbreite b erreicht. Für größere Wanddicken können auch mehrere Spuren überlappend aufgeschmolzen werden.

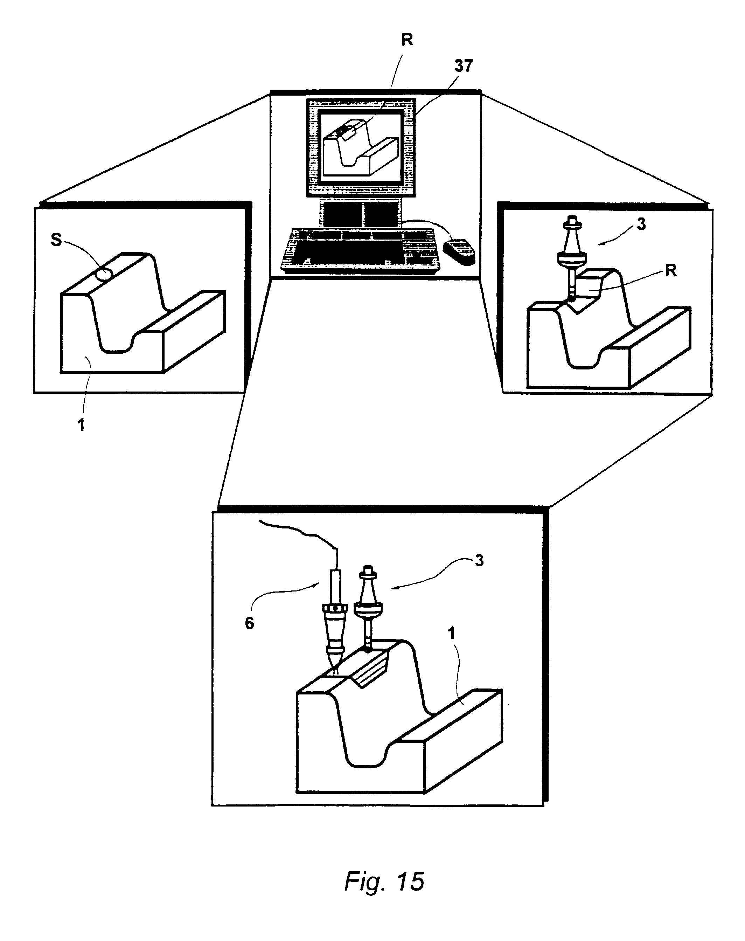

Fig. 15 zeigt die Verfahrensschritte, die zum partiellen Aufbau eines Formwerkzeugs, d.h. insbesondere für die Reparatur des Formwerkzeugs, gemäß einem bevorzugten Ausführungsbeispieles des Verfahrens erfolgen.

Besitzt ein Werkstück 1 eine schadhafte Stelle S, so wird zunächst mit Hilfe der CAD-Einheit 37 ein geometrisch regelmäßiger Bereich R in dem Werkstück 1 definiert, der die schadhafte Stelle S beinhaltet. Der geometrisch regelmäßige Bereich R wird mittels der Zerspanungsvorrichtung 3 aus dem Werkstück 1 gefräst, bzw. geschliffen, um anstelle des schadhaften Bereichs S, der eine unregelmäßige und unbestimmte Form aufweist, einen Bereich bekannter Geometrie zu schaffen.

Das Werkstück 1 wird in dem Bereich der Ausnehmung, die durch den geometrischen regelmäßigen Bereich R gebildet wird, lokal neu aufgebaut, indem metallhaltiges Pulver schichtweise aufgeschmolzen wird. Die zuvor beschriebenen Verfahrensstrategien werden hierbei entsprechend dem Werkstück abgestimmt.

In dem geometrisch regelmäßigen Bereich R werden vorzugsweise, um die Festigkeit des Werkstücks 1 im Bereich der zu reparierenden schadhaften Stelle S zu erhöhen, Stütztaschen zur Abstützung des neu aufgebauten Bereichs vorgesehen.

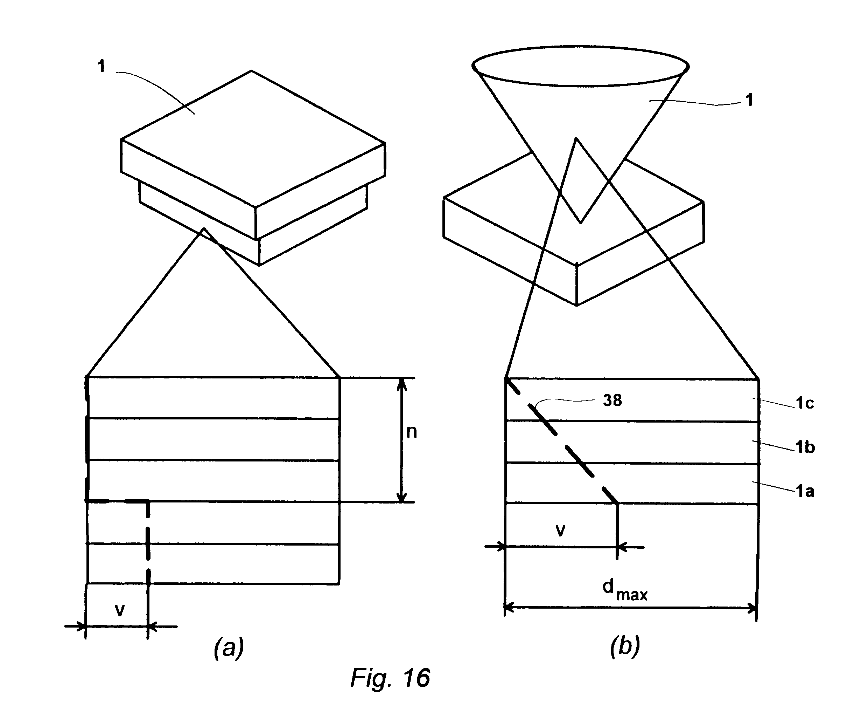

Fig. 16 verdeutlicht die Herstellung hinterschnittener Werkstücke 1 gemäß einer bevorzugten Ausführungsform des erfindungsgemäßen Verfahrens, wobei das Werkstück 1 gemäß Fig. 16a stufenförmig und gemäß Fig. 16b kegelförmig hinterschnitten ist.

Um hinterschnittene Werkstücke 1 herzustellen, werden zunächst n Schichten aufgeschmolzen, wobei die einzelnen Schichten jeweils nur an einer Oberseite spanend nachbearbeitet werden, auf die eine weitere Schicht aufgeschmolzen wird. Die Konturseiten der Schichten bleiben zunächst unbearbeitet. Die Anzahl n von Schichten wird entsprechend einer maximalen Breite bzw. eines maximalen Durchmessers dₘₐₓ der herzustellenden Sollkontur aufgeschmolzen. Wenn die notwendige Materialdicke, d.h. die Anzahl n von Schichten erreicht ist, werden die Schichten 1a, 1b und 1c an ihrer Konturseite spanend bearbeitet, um die Sollkontur 38 der Hinterschneidung herzustellen. In Fig. 16 ist die maximale Breite, die kollisions-frei mit dem Fräs- bzw. dem Schleifwerkzeug herzustellen ist, mit dem Buchstaben v gekennzeichnet.

Die vorstehend beschriebenen Ausführungsbeispiele des erfindungsgemäßen Verfahrens sowie der zugehörigen Vorrichtung zeichnen sich durch eine schnelle und sehr genaue Fertigung von Formwerkzeugen aus, die durch partiell abgstimmeten Materialeinsatz optimierte Werkzeugeigenschaften besitzt, wobei insbesondere die hohe Automatisierbarkeit und der geringe Programmieraufwand von Vorteil sind.

## Patentansprüche

1. Verfahren zur Herstellung von metallischen Werkstücken, insbesondere von Formwerkzeugen, wobei mit einem Laserstrahl metallhaltiges Pulver in einem Schmelzbereich des Laserstrahls schichtweise aufgeschmolzen wird, und aufgebrachte Schichten spanend nachbearbeitet werden, **dadurch gekennzeichnet**, daß das Pulver koaxial zu dem Laserstrahl (17) in den Schmelzbereich zugeführt wird und die einzelnen Schichten (1a, 1b....1n) in Spuren (α, β) mit einer Breite (b) im Bereich von 0,1 mm - 1 mm und einer Dicke (d) im Bereich von 0,05 mm - 0,5 mm aufgebracht werden.

2. Verfahren nach Anspruch 1, **dadurch gekennzeichnet**, daß die Spuren (α, β) mit einer Breite (b) im Bereich von 0,2 mm - 0,5 mm und einer Dicke (d) im Bereich von 0,05 mm - 0,2 mm aufgebracht werden.

3. Verfahren nach Anspruch 1 oder 2, **dadurch gekennzeichnet**, daß eine einzelne Schicht (1a, 1b, 1n) in Spuren (α, β) unterschiedlicher Geometrie aufgebracht wird.

4. Verfahren nach Anspruch 3, **dadurch gekennzeichnet**, daß in Randzonen (A) einer Schicht (1a) Spuren (β) mit relativ geringer Breite (b) und geringer Dicke (d) aufgebracht werden, während in einer Kernzone der Schicht (1a) Spuren (α) mit relativ größerer Breite (b) und größerer Dicke (d) aufgebracht werden.

5. Verfahren nach zumindest einem der Ansprüche 1 - 4, **dadurch gekennzeichnet**, daß Spuren (α) in Kernzonen (B) unterschiedlicher Schichten (1a, 1b, 1n) in verschiedenen Richtungen aufgebracht werden.

6. Verfahren nach zumindest einem der Ansprüche 1 - 5, **dadurch gekennzeichnet**, daß das Pulver bei einer Laserleistung ≤ 1 kW aufgeschmolzen wird.

7. Verfahren nach zumindest einem der Ansprüche 1 - 6, **dadurch gekennzeichnet**, daß ein Nd-YAG-Laser verwendet wird.

8. Verfahren nach zumindest einem der Ansprüche 1 - 6, **dadurch gekennzeichnet**, daß ein CO₂-Laser verwendet wird.

9. Verfahren nach zumindest einem der Ansprüche 1 - 8, **dadurch gekennzeichnet**, daß Schichten (1a, 1b, 1n) und/oder Spuren (α, β) in einer Schicht aus unterschiedlichen Werkstoffen aufgebracht werden.

10. Verfahren nach Anspruch 9, **dadurch gekennzeichnet**, daß in beanspruchten Randzonen (A) des Werkstücks (1) Schichten (1n) und/oder Spuren (β) in einer Schicht (1n) aus hartem verschleißfestem Werkstoff aufgebracht werden, während in Kernzonen (B) des Werkstücks (1) Schichten (1a, 1b) und/oder Spuren (α) in einer Schicht aus weichzähem Werkstoff aufgebracht werden.

11. Verfahren nach zumindest einem der Ansprüche 1 - 10, **dadurch gekennzeichnet**, daß die aufgebrachten Schichten (1a, 1b, 1n) jeweils einzeln nachbearbeitet werden.

12. Verfahren nach Anspruch 11, **dadurch gekennzeichnet**, daß die jeweils zuletzt aufgebrachte Schicht (1a, 1b) vor Aufbringen einer weiteren Schicht (1b, 1c) an einer Oberseite (1'), auf die die weitere Schicht aufgebracht wird, planbearbeitet wird, während eine Konturseite (1") der zuletzt aufgebrachten Schicht vor Auftragen der weiteren Schicht unbearbeitet bleibt.

13. Verfahren nach Anspruch 11 oder 12, **dadurch gekennzeichnet**, daß jeweils die vorletzte Schicht (1a, 1b) oder mehrere vor der letzten Schicht (1c) aufgebrachte Schichten an einer Konturseite (1") nachbearbeitet werden.

14. Verfahren nach zumindest einem der Ansprüche 1 - 13, **dadurch gekennzeichnet**, daß die Schichten (1a, 1b, 1n) durch Fräsen und/oder Schleifen nachbearbeitet werden.

15. Verfahren nach Anspruch 14, **dadurch gekennzeichnet**, daß die Konturseiten (1") der Schichten (1a, 1b, 1n) mit Feinfräswerkzeugen bearbeitet werden, während die Oberseite(1') der jeweils zuletzt aufgebrachten Schicht mit Grobfräswerkzeugen bearbeitet wird.

16. Verfahren nach zumindest einem der Ansprüche 1 - 15, **dadurch gekennzeichnet**, daß die Schichten (1a, 1b, 1n) mit Feinfräs- oder Schleifwerkzeugen (23) bei einer Drehzahl im Bereich von 10 x 10³ U/min - 60 x 10³ U/min feinbearbeitet werden.

17. Verfahren nach zumindest einem der Ansprüche 1 - 16, **dadurch gekennzeichnet**, daß die zuletzt aufgebrachte Schicht (1a) in einem Konturbereich nachbearbeitet wird, derart, daß der Konturbereich in eine vorbestimmte Form gebracht wird und daß in einem folgenden Schritt auf den nachbearbeiteten Konturbereich Spuren (β) geringer Dicke (d) und Breite (b) aufgebracht werden.

18. Verfahren nach zumindest einem der Ansprüche 1 - 17, **dadurch gekennzeichnet**, daß das Werkstück (1) während der Laser- und/oder der spanenden Bearbeitung gekühlt wird.

19. Verfahren nach zumindest einem der Ansprüche 1 - 18, **dadurch gekennzeichnet**, daß ungeschmolzenes Pulver aus einem Arbeitsbereich weggeblasen und/oder abgesaugt wird.

20. Vorrichtung zur Herstellung von metallischen Werkstücken, insbesondere von Formwerkzeugen, mit einer Beschichtungseinrichtung, die eine Lasereinheit mit einem Laserstrahl-Fokussierkopf und eine Pulverzuführungsvorrichtung zur Zuführung von metallhaltigem Pulver in einen Schmelzbereich des Laserstrahls aufweist, und einer Zerspanungsvorrichtung, insbesondere zur Durchführung des Verfahrens nach Anspruch 1, **dadurch gekennzeichnet**, daß die Pulverzuführungsvorrichtung einen Pulverkopf (5) aufweist, der koaxial mit dem Laserstrahl-Fokussierkopf angeordnet ist, und zur Aufschmelzung des zugeführten Pulvers in Spuren unterschiedlicher Dicke und/oder Breite in Richtung des Laserstrahls (17) relativ zu dem Laserstrahl-Fokussierkopf (4) verstellbar ist, wobei die koaxiale Zuführung des Pulvers in den Schmelzbereich des Laserstrahles ein stabiles Aufschmelzen des Pulvers zur Aufbringung von Spuren mit einer Breite (b) im Bereich von 0,1 mm - 1 mm und einer Dicke (d) im Bereich von 0,05 mm - 0,5 mm ermöglicht.

21. Vorrichtung nach Anspruch 20, **dadurch gekennzeichnet**, daß der Laserstrahl-Fokussierkopf (4) und der Pulverkopf (5) eine integrale Beschichtungseinheit (6) bilden.

22. Vorrichtung nach Anspruch 20 oder 21 , **dadurch gekennzeichnet**, daß die Zerspanungsvorrichtung (3) einen Zerspanungskopf (7) mit einem Fräs- oder Schleifwerkzeug (23) aufweist.

23. Vorrichtung nach Anspruch 21 oder 22, **dadurch gekennzeichnet**, daß der Zerspanungskopf (7) und die Beschichtungseinheit (6) an einer Haltevorrichtung (8, 34) gelagert sind.

24. Vorrichtung nach Anspruch 23, **dadurch gekennzeichnet**, daß die Haltevorrichtung (34) eine Werkzeugwechselvorrichtung (33) aufweist, in die wahlweise der Zerspanungskopf (7) und die Beschichtungseinheit (6) einspannbar sind.

25. Vorrichtung nach Anspruch 24, **dadurch gekennzeichnet**, daß der Zerspanungskopf (7) und die Beschichtungseinheit (6) zueinander koaxial angeordnet sind.

26. Vorrichtung nach zumindest einem der Ansprüche 21 - 23, **dadurch gekennzeichnet**, daß der Zerspanungskopf (7) und die Beschichtungseinheit (6) zueinander versetzt angeordnet sind.

27. Vorrichtung nach Anspruch 26, **dadurch gekennzeichnet**, daß der Zerspanungskopf (7) relativ zu der Beschichtungseinheit (6) in einer Richtung senkrecht zu einem Werktisch (9) verstellbar ist.

28. Vorrichtung nach zumindest einem der Ansprüche 23 - 27, **dadurch gekennzeichnet**, daß die Haltevorrichtung (8, 34) und der Werktisch (9) relativ zueinander entlang Dreierachsen (xyz) verstellbar sind.

29. Vorrichtung nach zumindest einem der Ansprüche 23 - 27, **dadurch gekennzeichnet**, daß die Haltevorrichtung (8, 34) und der Werktisch (9) relativ zueinander fünfachsig verstellbar sind.

30. Vorrichtung nach Anspruch 28 oder 29, **dadurch gekennzeichnet**, daß jeweils numerisch gesteuerte Vorschubantriebe zur Verstellung der Haltevorrichtung (8) und des Werktisches (9) relativ zueinander vorgesehen sind.

31. Vorrichtung nach zumindest einem der Ansprüche 20 - 30, **dadurch gekennzeichnet**, daß ein numerisch gesteuerter Antrieb zur Verstellung des Laserstrahl-Fokussierkopfes (4) und des Pulverkopfes (5) relativ zueinander vorgesehen ist.

32. Vorrichtung nach zumindest einem der Ansprüche 20 - 31, **dadurch gekennzeichnet**, daß ein Lichtwellenleitfaserkabel (22) mit dem Laserstrahl-Fokussierkopf (4) verbunden ist.

33. Vorrichtung nach zumindest einem der Ansprüche 20 - 31, **dadurch gekennzeichnet**, daß eine Umlenkspiegelvorrichtung (50) vorgesehen ist.

34. Vorrichtung nach zumindest einem der Ansprüche 20 - 33, **dadurch gekennzeichnet**, daß als Laserquelle ein Nd-YAG-Laser vorgesehen ist.

35. Vorrichtung nach Anspruch 33, **dadurch gekennzeichnet**, daß als Laserquelle ein CO₂-Laser vorgesehen ist.

36. Vorrichtung nach zumindest einem der Ansprüche 21 - 35, **dadurch gekennzeichnet**, daß dem Zerspanungskopf (7) eine Antriebsvorrichtung zum Antrieb des Fräs- oder Schleifwerkzeugs (23) zugeordnet ist.

37. Vorrichtung nach Anspruch 36, **dadurch gekennzeichnet**, daß das Fräs- oder Schleifwerkzeug (23) im Bereich von 10 x 10³ U/min - 60 x 10³ U/min antreibbar ist.

38. Vorrichtung nach Anspruch 36 oder 37, **dadurch gekennzeichnet**, daß die Antriebsvorrichtung eine elektrische Hochgeschwindigkeitsspindel aufweist.

39. Vorrichtung nach zumindest einem der Ansprüche 20 - 38, **dadurch gekennzeichnet**, daß ein Werktisch (9) eine Kühlvorrichtung (24) aufweist.

40. Vorrichtung nach Anspruch 39, **dadurch gekennzeichnet**, daß die Kühlvorrichtung im Werktisch (9) ausgebildete Kühlmittelkanäle (25) aufweist.

41. Vorrichtung nach zumindest einem der Ansprüche 20 - 40, **dadurch gekennzeichnet**, daß eine Pulverabsaugvorrichtung (26) in einem Arbeitsbereich der Beschichtungseinheit (6) vorgesehen ist.

42. Vorrichtung nach zumindest einem der Ansprüche 20 - 41, **dadurch gekennzeichnet**, daß eine elektronische Steuereinrichtung zur Steuerung der Beschichtungseinrichtung (2) und der Zerspanungsvorrichtung (3) vorgesehen ist.

43. Vorrichtung nach Anspruch 42, **dadurch gekennzeichnet**, daß die Steuereinrichtung eine Schnittstelle aufweist, die mit einer CAD-Einheit (37) verbindbar ist.

44. Vorrichtung nach Anspruch 43, **dadurch gekennzeichnet**, daß die Steuereinrichtung auf der Grundlage von CAD-Geometriedaten und manuell eingegebener Daten ein Bearbeitungsprogramm zur Ansteuerung der Beschichtungseinrichtung (2) und der Zerspanungsvorrichtung (3) erzeugt.

## Claims

1. Method for producing metal workpieces, in particular form tools, metalliferous powder being melted on in layers using a laser beam in a melting zone of the laser beam, and deposited layers being finished by cutting, characterized in that the powder is supplied to the melting zone coaxially to the laser beam (17) and the individual layers (1a, 1b ... 1n) are deposited in tracks (α, β) of a width (b) in the range from 0.1 mm - 1 mm and a thickness (d) in the range from 0.05 mm - 0.5 mm.

2. Method according to claim 1, characterized in that the tracks (α, β) are deposited with a width (b) in the range from 0.2 mm - 0.5 mm and a thickness (d) in the range from 0.05 mm - 0.2 mm.

3. Method according to claim 1 or 2, characterized in that a single layer (1a, 1b, 1n) is deposited in tracks (α, β) of different geometry.

4. Method according to claim 3, characterized in that in boundary zones (A) of a layer (1a) tracks (β) of relatively small width (b) and small thickness (d) are deposited, while in a core zone of the layer (1a), tracks (α) of relatively greater width (b) and greater thickness (d) are deposited.

5. Method according to at least one of claims 1 - 4, characterized in that tracks (α) in core zones (B) of different layers (1a, 1b, 1n) are deposited in different directions.

6. Method according to at least one of claims 1 - 5, characterized in that the powder is melted on at a laser output ≤ 1 kW.

7. Method according to at least one of claims 1 - 6, characterized in that an Nd-YAG laser is used.

8. Method according to at least one of claims 1 - 6, characterized in that a CO₂ laser is used.

9. Method according to at least one of claims 1 - 8, characterized in that layers (1a, 1b, 1n) and/or tracks (α, β) in a layer are deposited of different materials.

10. Method according to claim 9, characterized in that in stressed boundary areas (A) of the workpiece (1) layers (1n) and/or tracks (β) in a layer (1n) are deposited of hard wear-resistant material, while in core zones (B) of the workpiece (1) layers (1a, 1b) and/or tracks (α) in a layer are deposited of soft tenacious material.

11. Method according to at least one of claims 1 - 10, characterized in that the layers deposited (1a, 1b, 1n) are each finished individually.

12. Method according to claim 11, characterized in that the last layer (1a, 1b) deposited in each case is faced prior to deposition of a further layer (1b, 1c) on a top surface (1'), on which the further layer is deposited, while a contour side (1") of the last layer deposited remains unmachined prior to deposition of the further layer.

13. Method according to claim 11 or 12, characterized in that the penultimate layer (1a, 1b) in each case or several layers deposited before the last layer (1c) are finished on a contour side (1").

14. Method according to at least one of claims 1 - 13, characterized in that the layers (1a, 1b, 1n) are finished by milling and/or grinding.

15. Method according to claim 14, characterized in that the contour sides (1") of the layers (1a, 1b, 1n) are machined using fine-milling tools, while the top surface (1') of the last layer deposited in each case is machined using coarse-milling tools.

16. Method according to at least one of claims 1 - 15, characterized in that the layers (1a, 1b, 1n) are fine-machined using fine-milling or grinding tools (23) at a speed in the range from 10 x 10³ rpm - 60 x 10³ rpm.

17. Method according to at least one of claims 1 - 16, characterized in that the last layer (1a) deposited is finished in a contour area in such a way that the contour area is brought to a predetermined shape and that in a following step tracks (β) of small thickness (d) and width (b) are deposited on the finished contour area.

18. Method according to at least one of claims 1 - 17, characterized in that the workpiece (1) is cooled during the laser working and/or cutting machining.

19. Method according to at least one of claims 1 - 18, characterized in that unmelted powder is blown and/or sucked away from a working area.

20. Device for producing metal workpieces, in particular form tools, with a coating device, which has a laser unit with a laser beam focusing head and a powder feed device for feeding metalliferous powder to a melting zone of the laser beam, and a cutting device, in particular for executing the method according to claim 1, characterized in that the powder feed device has a powder head (5), which is disposed coaxially to the laser beam focusing head, and is adjustable for melting the powder fed in tracks of differing thickness and/or width in the direction of the laser beam (17) relative to the laser beam focusing head (4), the coaxial feed of the powder to the melting zone of the laser beam facilitating stable melting of the powder for the deposition of tracks with a width (b) in the range from 0.1 mm - 1 mm and a thickness (d) in the range from 0.05 mm - 0.5 mm.

21. Device according to claim 20, characterized in that the laser beam focusing head (4) and the powder head (5) form an integral coating unit (6).

22. Device according to claim 20 or 21, characterized in that the cutting device (3) has a cutting head (7) with a milling or grinding tool (23).

23. Device according to claim 21 or 22, characterized in that the cutting head (7) and the coating unit (6) are supported on a holding device (8, 34).

24. Device according to claim 23, characterized in that the holding device (34) has a tool-changing device (33), in which optionally the cutting head (7) and the coating unit (6) are clampable.

25. Device according to claim 24, characterized in that the cutting head (7) and the coating unit (6) are disposed coaxially to one another.

26. Device according to at least one of claims 21 - 23, characterized in that the cutting head (7) and the coating unit (6) are disposed offset in relation to one another.

27. Device according to claim 26, characterized in that the cutting head (7) is adjustable relative to the coating unit (6) in a direction perpendicular to a worktable (9).

28. Device according to at least one of claims 23 - 27, characterized in that the holding device (8, 34) and the worktable (9) are adjustable relative to one another along three axes (xyz).

29. Device according to at least one of claims 23 - 27, characterized in that the holding device (8, 34) and the worktable (9) are adjustable relative to one another with five axes.

30. Device according to claim 28 or 29, characterized in that numerically controlled feed drives are provided in each case for adjusting the holding device (8) and the worktable (9) relative to one another.

31. Device according to at least one of claims 20 - 30, characterized in that a numerically controlled drive is provided for adjusting the laser beam focusing head (4) and the powder head (5) relative to one another.

32. Device according to at least one of claims 20 - 31, characterized in that an optical fibre cable (22) is connected to the laser beam focusing head (4).

33. Device according to at least one of claims 20 - 31, characterized in that a tilted mirror device (50) is provided.

34. Device according to at least one of claims 20 - 33, characterized in that an Nd-YAG laser is provided as a laser source.

35. Device according to claim 33, characterized in that a CO₂ laser is provided as a laser source.

36. Device according to at least one of claims 21 - 35, characterized in that assigned to the cutting head (7) is a drive device for driving the milling or grinding tool (23).

37. Device according to claim 36, characterized in that the milling or grinding tool (23) is drivable in the range from 10 x 10³ rpm - 60 x 10³ rpm.

38. Device according to claim 36 or 37, characterized in that the drive device has an electric high-speed spindle.

39. Device according to at least one of claims 20 - 38, characterized in that a worktable (9) has a cooling device (24) .

40. Device according to claim 39, characterized in that the cooling device in the worktable (9) has formed cooling ducts (25).

41. Device according to at least one of claims 20 - 40, characterized in that a powder suction device (26) is provided in a working area of the coating unit (6).

42. Device according to at least one of claims 20 - 41, characterized in that an electronic control device for controlling the coating device (2) and the cutting device (3) is provided.

43. Device according to claim 42, characterized in that the control device has an interface, which is connectable to a CAD unit (37).

44. Device according to claim 43, characterized in that the control device generates a machining program on the basis of CAD geometry data and manually input data for activating the coating device (2) and the cutting device (3).

## Revendications

1. Procédé de fabrication de pièces métalliques, notamment d'outils de formage, dans lequel une poudre métallique est déposée couche par couche par fusion à l'aide d'un rayon laser sur une zone de fusion du rayon laser, et dans lequel les couches appliquées sont usinées par enlèvement de copeaux, caractérisé en ce que la poudre est amenée dans la zone de fusion de façon coaxiale par rapport au rayon laser (17), et que les différentes couches (1a, 1b...1n) sont déposées par bandes (α, β) d'une largeur (b) comprise entre 0,1 mm et 1 mm et d'une épaisseur (d) comprise entre 0,05 mm et 0,5 mm.

2. Procédé selon la revendication 1, caractérisé en ce que les bandes (α, β) sont déposées et ont une largeur (b) comprise entre 0,2 mm et 0,5 mm et une épaisseur (d) comprise entre 0,05 et 0,2 mm.

3. Procédé selon la revendication 1 ou 2, caractérisé en ce qu'une seule couche (1a, 1b, 1n) est déposée par bandes (α, β) de géométries différentes.

4. Procédé selon la revendication 3, caractérisé en ce que dans les zones de bordure (A) d'une couche (1a), des bandes (β) d'une largeur (b) et d'une épaisseur (d) relativement faibles sont déposées, tandis que sur une zone centrale de la couche (1a) des bandes (α) d'une largeur (b) et d'une épaisseur (d) relativement plus importantes sont déposées.

5. Procédé selon au moins l'une des revendications 1 à 4, caractérisé en ce que les bandes (α) sont déposées sur des zones centrales (B) de différentes couches (1a, 1b, 1n) dans des directions différentes.

6. Procédé selon au moins l'une des revendications 1 à 5, caractérisé en ce que la poudre est appliquée par fusion avec une puissance de laser inférieure ou égale à 1 kW.

7. Procédé selon au moins l'une des revendications 1 à 6, caractérisé en ce que l'on utilise un laser YAG dopé au néodyme.

8. Procédé selon au moins l'une des revendications 1 à 6, caractérisé en ce que l'on utilise un laser à Co₂.

9. Procédé selon au moins l'une des revendications 1 à 8, caractérisé en ce que les couches (1a, 1b, 1n) et/ou les bandes (α, β) sont déposées en une couche à base de matières différentes.

10. Procédé selon la revendication 9, caractérisé en ce que sur des zones de bordure (A) sollicitées de la pièce (1), des couches (1n) et/ou des bandes (β) sont déposées en une couche (1n) d'une matière dure résistante à l'usure, tandis que sur des zones centrales (B) de la pièce (1), des couches (1a, 1b) et/ou des bandes (α) sont déposées en une couche de matière douce.

11. Procédé selon au moins l'une des revendications 1 à 10, caractérisé en ce que les couches déposées (1a, 1b, 1n) sont respectivement usinées de façon individuelle.

12. Procédé selon la revendication 11, caractérisé en ce que la couche (1a, 1b) respectivement déposée en dernier est tournée transversalement avant le dépôt d'une autre couche (1b, 1c) sur une face supérieure (1') sur laquelle est déposée la couche suivante, tandis qu'une face de contour (1") de la dernière couche déposée reste sans usinage avant le dépôt de la couche suivante.

13. Procédé selon la revendication 11 ou 12, caractérisé en ce que respectivement l'avant-dernière couche (1a, 1b) ou plusieurs couches déposées avant la dernière couche (1c) sont usinées sur une face de contour (1").

14. Procédé selon au moins l'une des revendications 1 à 13, caractérisé en ce que les couches (1a, 1b, 1n) sont usinées par fraisage et/ou meulage.

15. Procédé selon la revendication 14, caractérisé en ce que les faces de contour (1") des couches (1a, 1b, 1n) sont usinées à l'aide d'outils de fraisage fins, tandis que la face supérieure (1') de la couche respectivement déposée en dernier est usinée à l'aide d'outils de fraisage grossier.

16. Procédé selon au moins l'une des revendications 1 à 15, caractérisé en ce que les couches (1a, 1b, 1n) subissent un usinage fin à l'aide d'outils de fraisage fins ou d'outils de meulage (23) à une vitesse de rotation comprise entre 10 x 10³ tr/min. et 60 x 10³ tr/min.

17. Procédé selon au moins l'une des revendications 1 à 16, caractérisé en ce que la couche (1a) déposée en dernier est usinée dans une zone de contour de telle sorte que la zone de contour soit obtenue dans une forme prédéterminée et que dans une étape suivante, des bandes (β) de faible épaisseurs (d) et largeur (b) soient déposées sur la zone de contour usinée.

18. Procédé selon au moins l'une des revendications 1 à 17, caractérisé en ce que la pièce (1) est refroidie pendant le traitement laser et/ou l'enlèvement de copeaux.

19. Procédé selon au moins l'une des revendications 1 à 18, caractérisé en ce que la poudre non fondue est expulsée et/ou aspirée d'une zone de travail.

20. Dispositif de fabrication dé pièces métalliques, notamment d'outils de formage, comprenant un dispositif de revêtement présentant une unité laser avec une tête de focalisation du rayon laser, et un dispositif d'alimentation en poudre pour alimenter une zone de fusion du rayon laser avec de la poudre métallique, et un dispositif d'enlèvement de copeaux, notamment pour la mise en oeuvre du procédé selon la revendication 1, caractérisé en ce que le dispositif d'alimentation en poudre présente une tête à poudre (5) disposée coaxialement par rapport à la tête de focalisation du rayon laser et mobile en direction du rayon laser (17) relativement par rapport à la tête de focalisation (4) du rayon laser pour disposer par fusion la poudre amenée en bandes d'épaisseurs et/ou largeurs différentes, l'amenée coaxiale de la poudre dans la zone de fusion du rayon laser permettant une fusion stable de la poudre pour disposer des bandes d'une largeur (b) comprise entre 0,1 mm et 1 mm et d'une épaisseur (d) comprise entre 0,05 mm et 0,5 mm.

21. Dispositif selon la revendication 20, caractérisé en ce que la tête de focalisation (4) du rayon laser et la tête à poudre (5) constituent une unité de revêtement (6) intégrale.

22. Dispositif selon la revendication 20 ou 21, caractérisé en ce que le dispositif d'enlèvement de copeaux (3) présente une tête d'enlèvement (7) comprenant un outil de fraisage ou de meulage (23)

23. Dispositif selon la revendication 21 ou 22, caractérisé en ce que la tête d'enlèvement (7) et l'unité de revêtement (6) sont logées sur un dispositif de maintien (8, 34).

24. Dispositif selon la revendication 23, caractérisé en ce que le dispositif de maintien (34) présente un dispositif de changement d'outil (33) permettant de recevoir au choix la tête d'enlèvement (7) et l'unité de revêtement (6).

25. Dispositif selon la revendication 24, caractérisé en ce que la tête d'enlèvement (7) et l'unité de revêtement (6) sont disposées de façon coaxiale l'une par rapport à l'autre.

26. Dispositif selon au moins l'une des revendications 21 à 23, caractérisé en ce que la tête d'enlèvement (7) et l'unité de revêtement (6) sont disposées de façon décalée l'une par rapport à l'autre.

27. Dispositif selon la revendication 26, caractérisé en ce que la tête d'enlèvement (7) est mobile relativement par rapport à l'unité de revêtement (6) dans une direction verticale par rapport à une table de travail (9).

28. Dispositif selon au moins l'une des revendications 23 à 27, caractérisé en ce que le dispositif de maintien (8, 34) et la table de travail (9) sont mobiles relativement l'un par rapport à l'autre le long de trois axes (xyz).

29. Dispositif selon au moins l'une des revendications 23 à 27, caractérisé en ce que le dispositif de maintien (8, 34) et la table de travail (9) sont mobiles relativement l'un par rapport à l'autre selon cinq axes.

30. Dispositif selon la revendication 28 ou 29, caractérisé en ce que respectivement des entraînements d'avance à commande numérique sont prévus pour le déplacement relatif l'un par rapport à l'autre du dispositif de maintien (8) et de la table de travail (9).

31. Dispositif selon au moins l'une des revendications 20 à 30, caractérisé en ce qu'un entraînement à commande numérique est prévu pour le déplacement relatif l'une par rapport à l'autre de la tête de focalisation (4) du rayon laser et de la tête à poudre (5).

32. Dispositif selon au moins l'une des revendications 20 à 31, caractérisé en ce qu'un câble à guides d'ondes lumineuses (22) est relié à la tête de focalisation (4) du rayon laser.

33. Dispositif selon au moins l'une des revendications 20 à 31, caractérisé en ce qu'un dispositif à miroir de renvoi (50) est prévu.

34. Dispositif selon au moins l'une des revendications 20 à 33, caractérisé en ce qu'un laser YAG dopé au néodyme est prévu en tant que source laser.

35. Dispositif selon la revendication 33, caractérisé en ce qu'un laser à Co₂ est prévu en tant que source laser.

36. Dispositif selon au moins l'une des revendications 21 à 35, caractérisé en ce qu'un dispositif d'entraînement est associé à la tête d'enlèvement (7) pour entraîner l'outil de fraisage ou de meulage (23).

37. Dispositif selon la revendication 36, caractérisé en ce que l'outil de fraisage ou de meulage (23) peut être entraîné à une vitesse comprise entre 10 x 10³ tr/min. et 60 x 10³ tr/min.

38. Dispositif selon la revendication 36 ou 37, caractérisé en ce que le dispositif d'entraînement présente une broche électrique à grande vitesse.

39. Dispositif selon au moins l'une des revendications 20 à 38, caractérisé en ce qu'une table de travail (9) présente un dispositif de refroidissement (24).

40. Dispositif selon la revendication 39, caractérisé en ce que le dispositif de refroidissement présente des canaux à réfrigérant (25) formés dans la table de travail (9).

41. Dispositif selon au moins l'une des revendications 20 à 40, caractérisé en ce qu'un dispositif d'aspiration de poudre (26) est prévu sur une zone de travail de l'unité de revêtement (6).

42. Dispositif selon au moins l'une des revendications 20 à 41, caractérisé en ce qu'un dispositif de commande électronique est prévu pour la commande du dispositif de revêtement (2) et du dispositif d'enlèvement (3).

43. Dispositif selon la revendication 42, caractérisé en ce que le dispositif de commande présente une interface pouvant être reliée à une unité CAO (37).

44. Dispositif selon la revendication 43, caractérisé en ce que le dispositif de commande génère un programme d'usinage sur la base de données géométriques CAO et de données saisies manuellement pour la commande du dispositif de revêtement (2) et du dispositif d'enlèvement (3).
